(19) Europäisches Patentamt
European Patent Office
Office européen des brevets

(11) **EP 1 369 847 B1**

(12) **EUROPEAN PATENT SPECIFICATION**

(45) Date of publication and mention
of the grant of the patent:
**12.03.2008 Bulletin 2008/11**

(51) Int Cl.:
***G10L 15/18*** (2006.01)

(21) Application number: **02012336.0**

(22) Date of filing: **04.06.2002**

(54) **Speech recognition method and system**

Verfahren und Vorrichtung zur Spracherkennung

Système et méthode de reconnaissance de la parole

(84) Designated Contracting States:
**DE GB**

(43) Date of publication of application:
**10.12.2003 Bulletin 2003/50**

(73) Proprietor: **Intellectual Ventures Fund 21 LLC
Carson City NV 89706 (US)**

(72) Inventor: **Ruwisch, Dietmar
12557 Berlin (DE)**

(74) Representative: **Betten & Resch
Patentanwälte
Theatinerstrasse 8
80333 München (DE)**

(56) References cited:
**EP-A- 1 207 518        US-A- 6 061 652**

• AFIFY M ET AL: "NONLINEAR TIME ALIGNMENT IN STOCHASTIC TRAJECTORY MODELS FOR SPEECHRECOGNITION" ICSLP 94: 1994 INTERNATIONAL CONFERENCE ON SPOKEN LANGUAGE PROCESSING. (ICSLP) , vol. 1, 18 - 22 September 1994, pages 291-293, XP000855244 YOKOHAMA: ASJ, JP
• KIMURA T ET AL: "COMPACT-SIZE SPEAKER INDEPENDENT SPEECH RECOGNIZER FOR LARGE VOCABULARY USING COMPACTS METHOD" ICSLP 94: 1994 INTERNATIONAL CONFERENCE ON SPOKEN LANGUAGE PROCESSING (ICSLP), vol. 3, 18 - 22 September 1994, pages 1379-1382, XP000855519 YOKOHAMA: ASJ, JP

**Description**

BACKGROUND OF THE INVENTION

1. Field of the Invention

The present invention relates to speech recognition, and more particularly to a speech recognition method and system in which match likelihood of utterances and word models is maximized by a warping mechanism.

2. Description of the related Art

In recent years, the technology of automatic speech recognition (ASR) has made remarkable progress due to the increasing performance of computers and in particular of digital signal processing systems and mass memory as well as the development of advanced algorithms. Most ASR systems are designed for office applications running on a PC in a quiet environment. For "real world" applications those systems are often insufficient, since in a typical embedded control application there is not enough computational power and memory available. Furthermore, such applications suffer from noise and acoustic echoes which are serious problems in embedded ASR.

Present speech recognition systems often operate by matching a phonetic description or model of a word in their vocabulary against a representation of the acoustic signal generated by the utterance of the word to be recognized. In many systems, the acoustic signal generated by the speaking of the word to be recognized is converted by an A/D converter into a digital representation of the successive amplitudes of the audio signal created by the speech. Then, that signal is converted into a frequency domain signal which is also called the short-time-spectrum of the signal. Accordingly, the input signal is transformed into a sequence of spectra, each of which gives the amplitude of the speech signal in each of a plurality of frequency bands over a given time frame. The sequence of spectra is then transformed into a sequence of feature vectors by well-known methods as e.g. Mel Frequency Cepstral Coding (MFCC). Such systems commonly operate by comparing a sequence of feature vectors produced by the utterance to be recognized with a sequence of frames contained in the acoustic model of each word in their vocabulary.

In US 4,903,305 a method is described, in which word models are generated out of feature vectors by a set of speaker utterances. The feature vectors are clustered into acoustic sub-models and then the models are compared with utterances to be recognized during operation. The method enables recognition of words spoken by a given user with relative reliability by calculating a deviation tendency for each cluster. The method further includes the use of Dynamic Programming (DP). DP performs a "warping" of an utterances with single-word models, thus the system is able to cope with varying articulation speeds of different users. Such a method leads to a good performance, but it is rather memory consumptive during operation and needs good knowledge about the language in order to form appropriate models.

The widest dissemination in modern speech engines have statistical models of Hidden Markov type (HMMs). Not only the varying sounding of utterances are represented by occurrence probabilities, but also the phoneme progress in time is modeled with the help of a statistic process, namely the Markov process. However, human speech is not a Markov process and thus the Hidden Markov type model shows considerable shortfalls. Nevertheless, this model is commonly used because of its simple handling: a speech recognition system with acceptable performance can be built without any knowledge about speech, just using a large amount of data, i.e. recorded utterances of the words to be recognized. The high demand for data is due to the poor convergence of HMMs; and it is one of their biggest disadvantages.

It is therefore a goal of deriving more efficient means for representing the acoustic models. Present speech recognition methods also provide a code book in which a feature vector space of utterances to be recognized is clustered and representative vectors of respective clusters are stored in a searchable form. Using such codebook methods for data reduction leads to an improvement of this problem, but does not overcome the principal drawbacks of HMMs. Some principles of HMMs and common feature extraction using spectral representations together with their temporal derivations are described in US 5,943,647. Further details about HMMs as well as codebooks and vector quantization can be found in US 6,061,652.

Due to limited resources in embedded control platforms like micro-controllers and Digital Signal Processors (DSPs) speech recognition engines often use only rather simple feature extraction without a spectral representation of speech utterances to be recognized. Also word-modeling and pattern comparing is often quite simple in those applications as can be taken from WO 84/04620. Such applications typically show only limited performance and unsatisfactory recognition results. An example of such a system using a multi layer perceptron can be found in US 6,021,387.

It is a disadvantage of all described methods and systems that they need spoken input, typically of many speakers, in order to build single-word models or to form HMMs. In an embedded control application the vocabulary is limited, not only due to limited resources but also due to the nature of the application. Thus, there is a need for defining the vocabulary "in the field". The simplest method is to select the desired command words out of a bigger database.

However, when the desired word cannot be found in the database, it is impossible to use it in the application. A simple way to cope with this problem is based on sub-word models, e.g. syllables or phonemes, represented in the database in phonetic as well as orthographic form Such a system is shown in EP 0 564 166. During operation, a user utterance is translated into an orthographic sub-model transcription string and then the string is compared with the command words being stored as transcription strings. Such a method could be called "speech to text" in a direct sense, however, it does not yield good recognition results because there is too much simplification.

A superior solution to the problem is to construct single-word models or even HMMs with the help of a speech synthesizer that transforms phonetic or orthographic transcription into phonetic sequences. Such a system constructing HMMS with the help of phonetic transcriptions is described in EP 0562138 with the disadvantage that still a spoken utterance of the user is needed for HMM construction. This problem does not appear in DE 19751123 that follows a similar approach, but both the latter methods face the problem, that single words can be generated by a kind of synthesizer, but due to poor convergence, HMMs need a large set of utterances of the desired word in the "training phase".

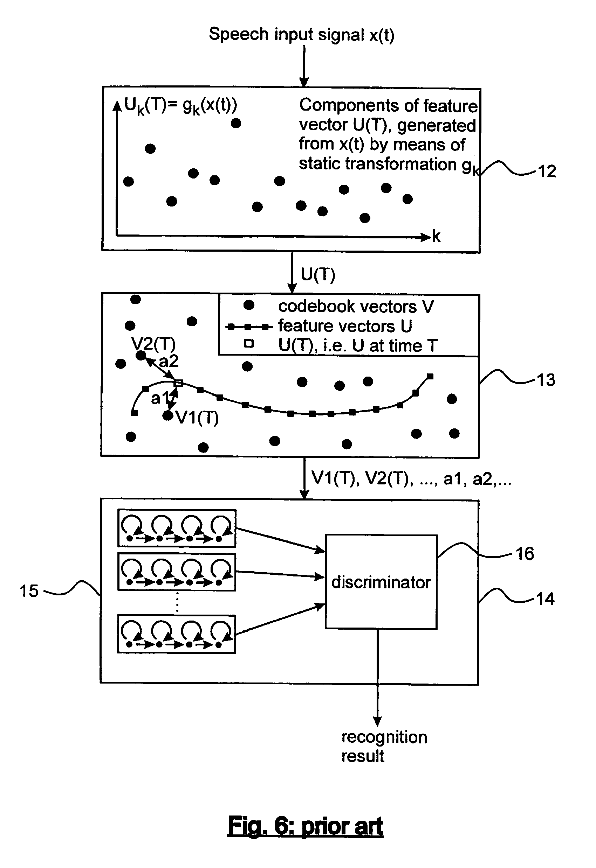

Fig. 6 shows an example of a prior art speech recognition system with a feature generator 12 that receives a speech input signal x(t). The feature generator 12 generates feature vectors U(T) from the speech input signal by means of a transformation g. In a subsequent feature comparator 13 feature vector U(T) is compared with codebook vectors out of a codebook V. A sequence of indices of best matching codebook vectors V1(T), V2(T), etc., (e.g. V1(T) best matching and V2(T) second best matching codebook vector) together with respective distances a1, a2, etc., of these matching codebook vectors are then communicated to a decision unit 14, where the best matching codebook vectors are compared to single word models 15 representing the words that can be recognized by the system. A discriminator 16 determines which word model fits best to said sequence of best matching codebook vectors which is then presented as the recognition result.

In AFIFI M ET AL: "NONLINEAR TIME ALIGNMENT IN STOCHASTIC TRAJECTORY MODELS FOR SPEECH RECOGNITION" ICSLP 94: 1994 INTERNATIONAL CONFERENCE ON SPOKEN LANGUAGE PROCESSING (ICSLP), vol. 1, 18 September 1994 (1994-09-18) - 22 September 1994 (1994-09-22), pages 291-293, XP000855244 YOKOHAMA: ASJ, JP, a non-linear time alignment tequnique is presented in the framework of stochastic trajectory models (STM) to obtain maximum likelihood estimates of model parameters, and how to use this technique during recognition with a slight additional computational overhead. A non-linear warping as post processor during training is applied which provides a kind of smoothing on the final trajectories after establishing their structure, and also facilitates testing various degrees of non-linearity starting from the original structure.

In KIMURA T ET AL: "COMPACT-SIZE SPEAKER INDEPENDENT SPEECH RECOGNIZER FOR LARGE VOCABULARY USING COMPACTS METHOD" ICSLP 94: 1994 INTERNATIONAL CONFERENCE ON SPOKEN LANGUAGE PROCESSING (ICSLP), vol. 3, 18 September 1994 (1994-09-18) - 22 September 1994 (1994-09-22) pages 1379-1382, XP000855519 YOKOHAMA: ASJ, JP, the development of a speaker-independent speech recognizer for large vocabulary comprising a combination of the segment-based parameter and the statistically-based distance measure is disclosed. To realize a small sized recognizer, a two-stage matching procedure is described. In the first stage, rough but high speed matching for all templates finds a small number of appropriate candidates. In the second stage, precise matching is performed for the candidates obtained in the first stage and then the final recognition result is determined.

In EP-A-1 207 518 A2, a speech recognition system with dynamic programming is disclosed for decoding one or more sequences of sub-word units into one or more representative words. The system uses a dynamic programming technique to align the sequence of sub-word units with a number of dictionary sub-word unit sequences representative of dictionary words to identify the most likely word or words corresponding to the spoken input.

## SUMMARY OF THE INVENTION

The present invention overcomes the foregoing and other problems with a speaker independent speech recognition technique in which likelihoods for speech utterances are determined according to features associated with these speech utterances.

According to the present invention, there is provided a method for speech recognition, as defined by independent claim 1, a computer program product as defined by claim 18, and a speech recognition system as defined by claim 19.

Methods, apparatuses, systems and articles of manufacture consistent with the present invention use a warping mechanism to maximize match likelihood of utterances and word models. Word models are divided into word sub-models, and each word sub-model is characterized by its position in the word model. Utterances of speech signals are represented by sequences of likelihood vectors having components which are the likelihood for an utterance of a respective word sub-model. The warping mechanism may be carried out locally only between adjacent word sub-models and respective sequences of likelihood vectors or globally for a entire word. In the warping operation, the likelihood that a word has occurred is maximized by successively warping the sequence of likelihood vectors corresponding to an input speech signal to sequences of word models to be recognized.

A word model is to be understood as a phonetic representation of a word to be recognized. Although word models are generally defined as divided into word sub-models, a certain word model may only consist of a single word sub-model.

In accordance with methods consistent with the present invention, a speech recognition method is provided in which phonetic word models comprising sub-models are used to represent words to be recognized, and in which feature vectors are generated from frames of an input speech signal. A matching likelihood vector is generated for each of said feature vectors, wherein each component of said likelihood vector is the likelihood for an utterance of a respective word sub-model, and a recognition result is determined from a best matching word model by warping a sequence of matching likelihood vectors to sequences of sub-models constituting word models to be recognized.

In accordance with methods consistent with the present invention, a method of deriving phonetic word models for use in speech recognition is provided, in which for each of a plurality of words a word model comprising a temporal sequence of word sub-models is determined. A sequence of feature vectors for each of spoken utterances is generated, at least one matching codebook vector for each feature vector is selected, and a set of likelihood vectors is generated, wherein each likelihood vector is associated with a codebook vector and the components of said likelihood vectors are the likelihood for the utterance of one of said word sub-models when said associated codebook vector is said matching codebook vector.

In accordance with systems consistent with the present invention a speech recognition system is provided.

The invention also provides a computer program product comprising computer program code which when executed on a computer enables the computer to carry out the speech recognition method according to the present invention.

A speech recognition system according to the present invention may be realized by a digital signal processing system which performs the signal processing in a program- or state-machine-controlled manner.

In accordance with methods, systems and articles of manufacture consistent with the present invention, the speech recognition techniques are used for recognizing speech signals transmitted acoustically. These speech signals come from a near end user of a device that carries out the speech recognition method or contains the speech recognition system, respectively, and the speech recognition may be used for controlling that device. The speech recognition method or the speech recognition system may particularly be used for controlling functions of a device in a situation where limited processing power is available. Particularly, a speech recognition system and method may be used for controlling functions of devices of e.g., a motor vehicle, e.g., a window winder, a radio receiver, a navigation system, a mobile telephone or even to control the motor vehicle itself.

The above-mentioned and other features, utilities and advantages of the invention will become apparent from the following detailed description of the preferred embodiments of the invention together with the accompanying drawings.

Other systems, methods, features and advantages of the invention will be or become apparent to one skilled in the art upon examination of the following figures and detailed description. It is intended that all such additional systems, methods, features and advantages be included within this description, be within the scope of the invention, and be protected by the accompanying drawings.

BRIEF DESCRIPTION OF THE DRAWINGS

The accompanying drawings, which are incorporated in and constitute a part of this specification, illustrate an implementation of the invention and, together with the description, serve to explain the advantages and principles of the invention. In the drawings:

Fig. 1     depicts a block diagram of a speech recognition system according to first embodiment of the present invention;

Fig. 2     depicts a block diagram which illustrates a digital signal processing system according to an embodiment of the present invention;

Fig. 3     depicts a flow diagram which illustrates a method according to an embodiment of the present invention;

Fig. 4     depicts a flow diagram illustrating an operation that generates a matching likelihood vector consistent with a method according to the present invention;

Fig. 5     depicts a table 1 showing an example of a codebook vector table with an associated likelihood vector table and a table 2 showing an example of a word sub-model table comprising expected duration and variance of sub-models in the table;

Fig. 6     depicts a block diagram of a prior art voice recognition system;

Fig. 7     depicts a block diagram of a speech recognition system in accordance with methods, systems and articles of manufacture consistent with the present invention;

Fig. 8     depicts a scheme of a warper according to an embodiment of the present invention;

Fig. 9     depicts a block diagram of a discriminator according to an embodiment of the present invention;

Fig. 10     depicts a block diagram which illustrates a system and a method according to an embodiment of the present invention;

Fig. 11     depicts a flow diagram illustrating a warping operation with a sequence of L(T) and a sequence of W(y) consistent with a method according to the present invention;

Fig. 12     depicts a flow diagram illustrating a warp operation with sequences of L(T) and sequences of W(y) consistent with a method according to the present invention;

Fig. 13     depicts a flow diagram illustrating in more detail a warp operation consistent with a method according to the present invention;

Fig. 14     depicts table 3 showing a numerical example of a warping operation according to the warping operation in Fig. 13;

Fig. 15     depicts a flow diagram which illustrates a method according to an embodiment of the present invention;

Fig. 16     depicts a flow scheme illustrating an example of an operation of an embodiment according to Fig. 15.

## DESCRIPTIONS OF THE PREFERRED EMBODIMENTS

The following symbols will be used in describing the preferred embodiments according to the present invention:

$A(f,T)$     Signal spectrum, i.e. amplitude of frequency mode f at time T after noise suppression;

$c(T)$     Confidence vector;

$F(f,T)$     Filter function generating $A(f,T)$ from $X(f,T)$: $A(f,T) = X(f,T)F(f,T)$ for all f at time T;

$x(t)$     Samples of the input speech signal at time T;

$X(f,T)$     Spectrum of the input speech signal;

$f$     frequency which distinguishes the modes of a spectrum;

$g$     Function set for computing a feature vector $U(T)$ out of a spectrum $A(f,T)$;

$k$     Index denoting the components of vectors in feature space e.g. $c(T)$, $U(T)$, $V(T)$ and V as well as of the transformation g;

$t$     Time in which the speech signal is sampled;

$T$     Time in which the time signal is processed to form frames and spectra are derived therefrom;

$U(T)$     Feature vector at time T computed from $A(f,T)$;

$U_k(T)$     components of $U(T)$;

$V$     Set of codebook vectors in feature space;

$V(i)$     codebook vector in V;

$V_k(T)$     components of V(T);

V1 (T)     Codebook vector with least distance to feature vector U(T);

V2(T)     Codebook vector of which distance to feature vector U(T) is least but one;

a1     Distance between U(T) and V1 (T);

a2     Distance between U(T) and V2(T);

L     Set of likelihood vectors, each vector is associated with a codebook vector of the set V. A single vector component is the likelihood for an utterance of a word sub-model (e.g. phonemes, diphones, or syllables) when the associated codebook vector matches the feature vector U(T);

L 1 (T)     L-vector associated with V1 (T);

L2(T)     L-vector associated with V2(T);

L(T)     L-vector that is e.g. equal to L1, or a mixture of at least two vectors L1 and L2, e.g. L(T)=(a1 L2+a2L1)/(a1+a2);

p     Index denoting the components of vectors in likelihood space e.g. L(T);

$L_p(T)$     component of likelihood vector L(T) which indicates the probability for the occurrence of a word sub-unit in associated feature vector;

y     position pointer of a word sub-model within a word model;

$y_{end}$     y that indicates the last sub-model in a word model or length of the word model;

W(y)     Sub-model vector at position y of a word model;

$W_p(y)$     component of W(y) which indicates the expectation that a sub-model p belongs to the word model at position y;

D(y)     Expected duration of word sub-model at position y in a word model;

e(y)     Expected variance of D(y);

b(y)     border in time T for the transition of word-model-position y to position y+1;

M(y-1,y)     Match likelihood for word sub-model at adjacent positions $\gamma$-1 and y;

N(y)     word sub-model match likelihood at position y;

P     Match likelihood of a word model;

L(T,y)     likelihood matrix resulting from the scalar product of L(T)W(y) for each L(T) and W(y);

L(T)W(y)     match likelihood for a sub-model at position y and time T;

O(T,y)     optimal path likelihood at position y and time T;

$T_d$     dwell time T - Te;

Te     certain T, which is used as entry point in optimal path calculation through likelihood matrix L(T,y).

The present invention will now be described with reference to the accompanying drawings.

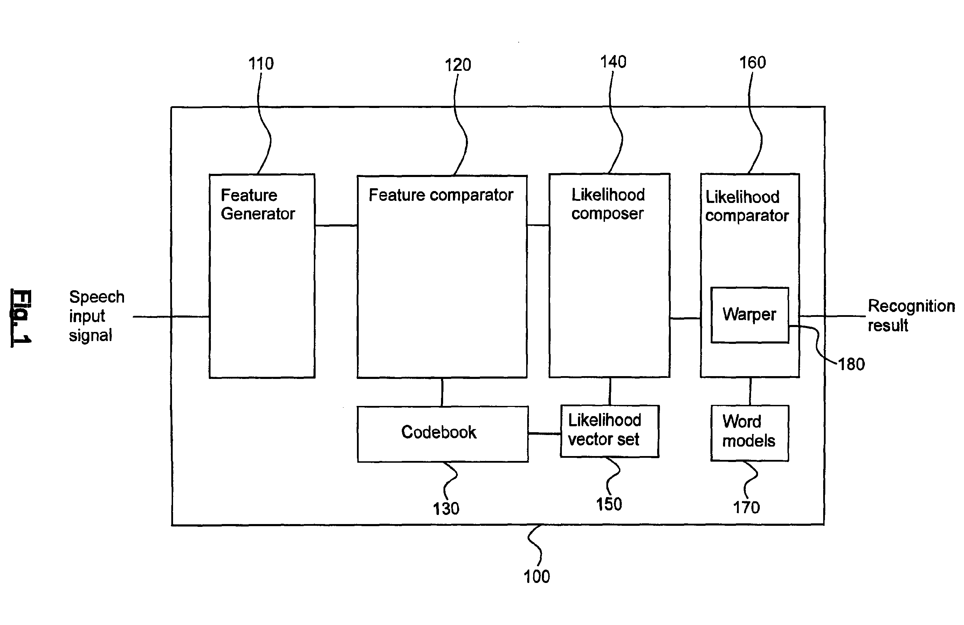

Fig. 1 depicts a block diagram of a speech recognition system 100 suitable for practicing methods and implementing a system consistent with an embodiment of the present invention. The speech recognition system 100 comprises a feature generator 110 for generating feature vectors from a speech input signal. Each feature vector contains features of the input speech signal in the frequency domain at a constant interval of time (designated as time frame or frame). A feature comparator 120 which is coupled to the feature generator 110 receives the feature vectors and determines for each feature vector at least one relating codebook vector. For the codebook vector determination, the feature comparator 120 queries a codebook 130 in which a set of codebook vectors V in feature space is stored and from which at least one codebook vector relating to the respective feature vector is selected. For example, the selected codebook vector is the best matching codebook vector, which means that the selected codebook vector is that vector in a codebook with the least or a minimum distance from the respective feature vector. In a likelihood composer 140 which is coupled to the feature comparator 120, a likelihood vector associated to the selected codebook vector is composed from a likelihood vector set 150. In the likelihood vector set 150 for each codebook vector in the codebook 130, an associated likelihood vector is stored. A single vector component of a likelihood vector is the likelihood for an utterance of a word sub-model or sub unit when the associated codebook vector matches the feature vector. In a likelihood comparator 170 which is coupled to the likelihood composer 140, a sequence of likelihood vectors of successive frames of the input speech signal is compared with word sub-models to determine a recognition result. In the likelihood comparator 160, a warper 180 maximizes the matched likelihood of each word sub-model by evaluating the likelihood values in the likelihood vectors for the respective word sub-models. The recognition result then is determined by computing a best matching word model taken from a reservoir of word models to be recognized (170) which has the highest word model match likelihood.

Systems and methods consistent with the present invention may be implemented in various data processing systems, like digital signal processing (DSP) systems, microcontroller or any other computer systems.

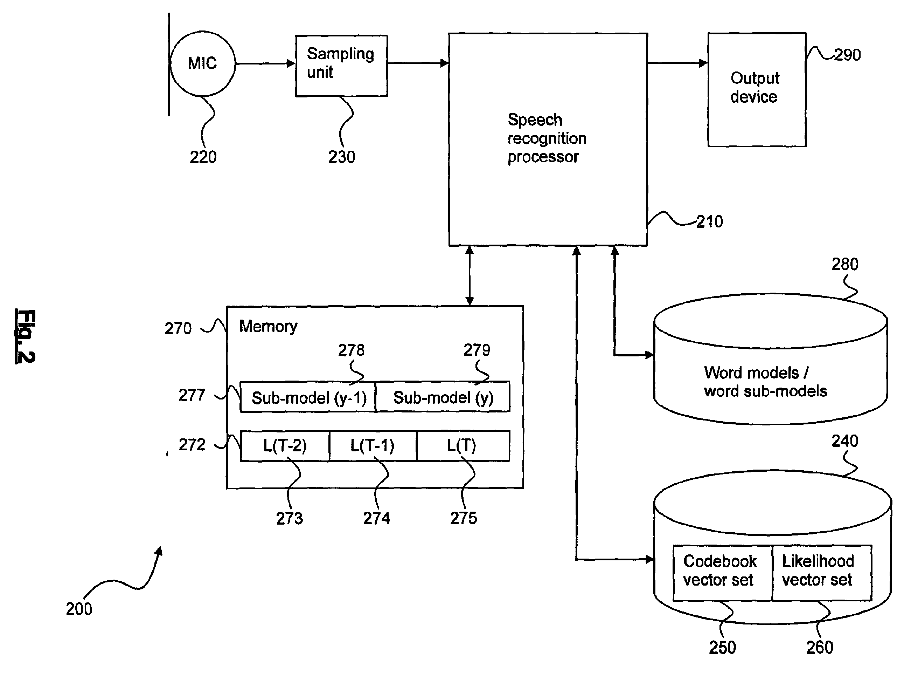

For example, the present invention may be implemented in a DSP system 200 as illustrated systematically in Fig. 2. The DSP system implementing the speech recognition system according to the present invention may comprise a processing unit and one or more storage units. A speech or word input signal is recorded by a microphone 220 and preprocessed by a sampling unit 230, for example, converting the analog input signal into a digital signal and sampling the input signal with a rate of e.g. 11 kHz and transforming the time-based signal by a well-known method such as filter bank, Fourier transformation, etc. into the frequency domain. These sampling and transformation operations could also be carried out by the speech recognition processor 210 itself or by a further preprocessing unit (not shown) in the input signal path. In a feature extraction operation a feature vector in feature space for each time frame is generated and may be stored in memory 270.

The functionality of the DSP-based speech recognition system 200 may be implemented by a computer program stored, e.g., in memory 270 which, when executed on the speech recognition processor 210, implements methods and systems consistent with the present invention.

The DSP system may further comprise an output device 290 which may be used for outputting recognition results or other relevant information to the user, for example, user information as part of the user interface.

The memory 270 may be a volatile memory and may be used as a main memory of the DSP system. The DSP system may comprise further storage units under control of the speech recognition processor comprising non-volatile memories 240 and 280 storing the codebook vector set V and the likelihood vector set L as well as word models and word sub-models relating to words to be recognized.

In accordance with an embodiment of the invention, feature vectors extracted from the input signal are compared by the speech recognition processor to codebook vectors stored in the codebook vector set 250. One or a plurality of codebook vectors best matching with the respective feature vectors together with the respective distances in feature space between the feature vectors and the matching codebook vectors are taken to determine the best matching likelihood vector relating to the respective feature vector. The likelihood vectors are stored in likelihood vector set 260 and may be accessed by the speech recognition processor by using, e.g., a load operation. A sequence of determined best matching likelihood vectors is successively loaded or fetched by the speech recognition processor and may be stored as a data structure 272 in memory 270. The data structure 272 comprises a sequence of best matching likelihood vectors in the succession of the transformed feature vectors. In Fig. 2, a series of likelihood vectors L = L(T-2), L(T-1), L(T) is shown as data structure in memory.

In the recognition operation, another data structure 277 comprising word sub-models 278, 279 are loaded or fetched by the speech recognition processor and may also be stored in memory 270. In the example shown in Fig. 2, two successive sub-models 278, 279 are shown, wherein y designates the position number of the respective word sub-model in a word model which is examined in the recognition operation. The speech recognition processor 210 then maximizes in a warping operation the match likelihood of each word sub-model by analyzing the likelihood for each word sub-model in the sequence of the likelihood vectors. The maximized match likelihoods for all positions y are merged into a word model likelihood from which a word model with highest matching likelihood is computed as recognition result. The recognition result may be output at output device 290.

The DSP-based speech recognition system 200 according to the present invention is particularly applicable to DSP systems comprising a standard DSP processor like a Texas Instruments TMS 320 C 5402 or any other processor with a performance range of at least 60 MIPS. Such a performance is sufficient due to the good recognition results of the system and also by a relatively low sampling rate in the range of 8 to 16 kHz and processing width of 16 bits. Good recognition results can be achieved by a sampling rate in the range of 11 to 16 kHz. For example, low-cost processors are applicable to the system which may be implemented in an embedded control application like a board computer in a motor vehicle or the like without the need for further processing power. The result of the speech recognition may be used to control functions, e.g., the vehicle or any other systems by outputting the recognition result in an appropriate form at output device 290. The output device may, e.g., be an interface circuit to a radio receiver or a mobile telephone. According to an embodiment of the invention, the speech recognition processor generates in response to instructions stored in the main memory 270 a sequence of matching likelihood vectors 272 from a speech input signal recorded by the microphone 220 and sampled by sampling unit 230. The speech recognition processor 210 further selects from database 280 word models and word sub-models of words to be recognized in order to maximize in relation to said sequence of likelihood vectors the matched likelihood of each analyzed word model.

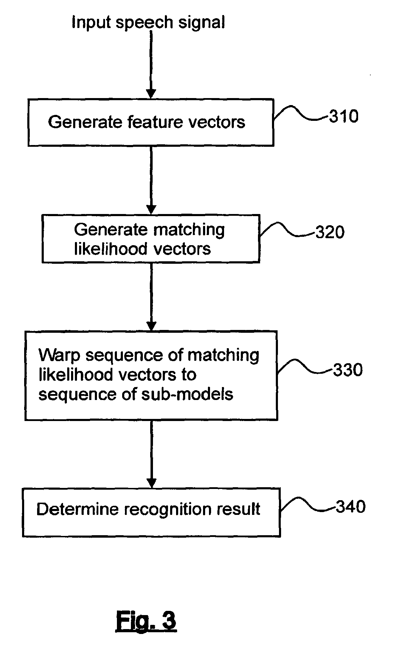

An embodiment of a speech recognition method according to the present invention is shown in Fig. 3 and will now be described. At each time T, a time frame comprises a plurality of samples of the input speech signal. For each frame, a feature vector comprising significant features of the speech signal is generated from that samples in the frame in operation 310. Then, for each of the feature vectors, a matching likelihood vector is generated in operation 320. Each component of likelihood vectors is the likelihood for an utterance of a respective word sub-model. Word sub-models are phonetic elements of which word models are assembled. Such word sub-models may be e.g. phonems, diphones, syllables described by phonetic letter models or even phonetic letter models themselves for each letter known in an alphabet. In next operation 330, a sequence of matching likelihood vectors is compared to a sequence of word sub-models. In this comparison operation, the match likelihood of each word sub-model is maximized by warping the sequence of matching likelihood vectors to the sequence of word sub-models. From the maximized match likelihood of each word sub-model in the sequence of sub-models a recognition result is determined in operation 340 by determining the word model with the highest matching likelihood.

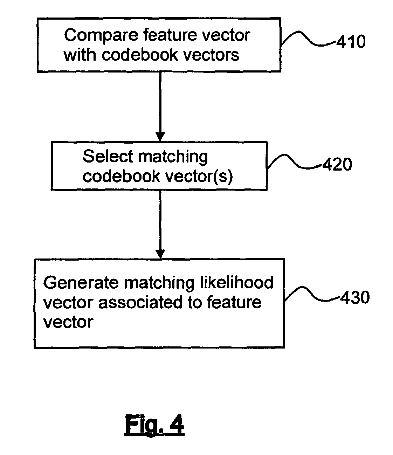

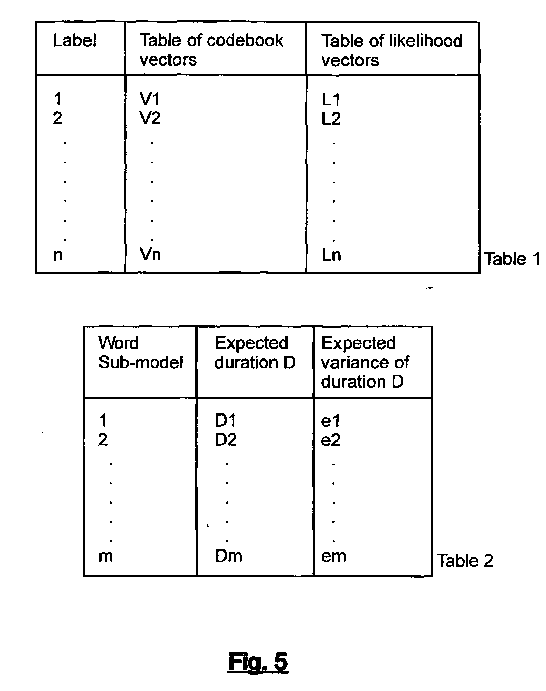

According to another embodiment of the present invention, a speech recognition method comprises use of a codebook holding representative vectors in feature space which may be used in the recognition operation as now described with respect to Fig. 4. Each vector in the codebook typically has a label by which the codebook vector is accessible. In operation 410, each feature vector in the sequence of feature vectors generated from the speech input signal is compared to the vectors in the codebook. Codebook vectors having a minimum distance or deviation from the respective feature vector are selected in operation 420 and will then be used in the further recognition operation. These codebook vectors with minimal distance or their respective labels are used together with the respective distances between respective feature and codebook vector to generate a matching likelihood vector for each feature vector in operation 430. According to an embodiment of the present invention, the matching likelihood vector from an associated feature vector is generated by an interpolation over the matching codebook vectors V1(T), V2(T) selected in operation 420, etc. and their respective distances a1, a2, etc. In detail, a feature vector out of the sequence of feature vectors of the input speech signal first is represented by best matching codebook vectors. Since there is a respective likelihood vector related to each codebook vector, the likelihood vectors belonging to the matching codebook vectors may be accessed by querying the likelihood vector set using the labels of the matching codebook vectors. For example, table 1 in Fig. 5 shows two joined columns of codebook vectors and likelihood vectors. For each label 1 to n there is a pair of a codebook vector and an associated likelihood vector in each row. A likelihood vector belonging to a respective codebook vector may therefore be accessed by using table 1 as a look-up table. From the so selected likelihood vectors, a matching likelihood vector L(T) is generated by interpolating the likelihood of the selected likelihood vectors for each component by using the distances a1, a2, etc. This means that in the likelihood vector space a matching likelihood vector is generated which corresponds to the respective feature vector in feature space.

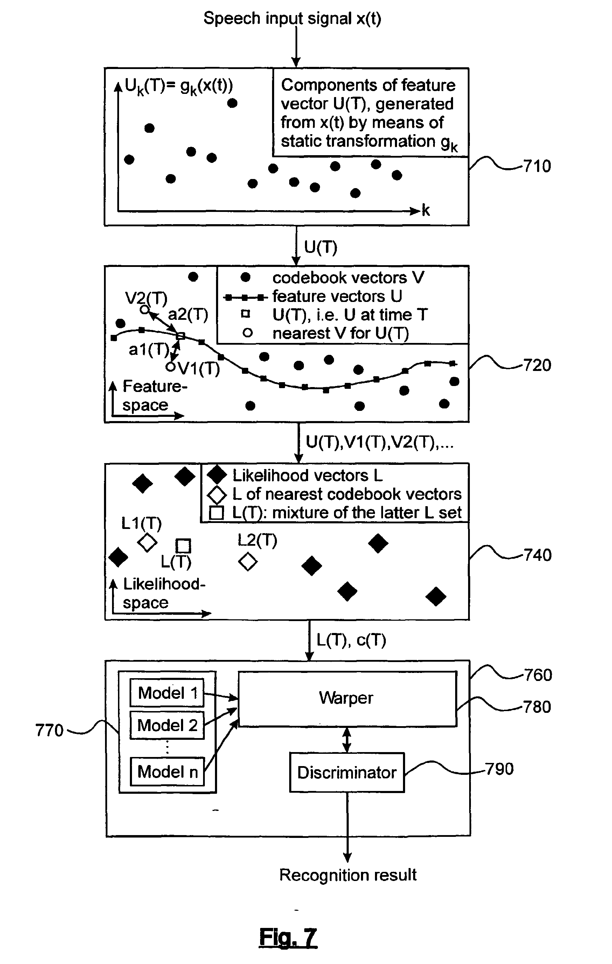

Fig. 7 shows a block diagram of a speech recognition system according to the present invention. A feature generator 710 receives a speech input signal x(t). The speech signal is transformed into a sequence of feature vectors U(T) by means of a transformation called g. Components $U_k(T)$ of feature vector U(T) represent typical features of a speech signal. In a feature comparator 720, each feature vector U(T) is compared to codebook vectors out of set V. As a result of this comparison, one or more matching codebook vectors V1 (T), V2(T), etc., together with respective distances a1, a2, etc., are selected. The distances a1, a2, ..., determine the distances in feature space between the matching codebook vectors and the feature vector, respectively, and are used to generate a matching likelihood vector from likelihood vectors associated with matching codebook vectors. Thus, the matching likelihood vector is calculated from the likelihood vectors associated with the matching codebook vectors. For example, the values of the vector components of the matching likelihood vector are calculated by averaging over the respective component values of the likelihood vectors associated with the matching codebook vectors.

According to another embodiment, distances a1, a2, ...., in feature space may be used as weighting information in likelihood space and, i.e. may be used to interpolate the likelihood values or the matching likelihood vector from the likelihood vectors L1 (T), L2(T), ..., corresponding to matching codebook vectors V1 (T), V2(T), ...., weighted according to the distance of U(T) to V1(T) and V2(T), respectively, in likelihood composer 740. The sequence of matching likelihood vectors L(T) is then used to determine the best matching word model.

A word model may be constructed of a sequence of word sub-models each characterized by its position in the word model. In likelihood comparator 760, sequences of matching likelihood vectors are compared to word models stored in a database 770. In a warper 780, the likelihood values in the components of matching likelihood vectors are compared with the occurrence of corresponding sub-models in the word model under examination and to maximize the match likelihood between each word sub-model and sub-sequences of the sequence of matching likelihood vectors. After this optimization process, which has been carried out for at least some word models, a discriminator 790 determines the recognition result by selecting the word model with the highest overall matching likelihood of the examined word models.

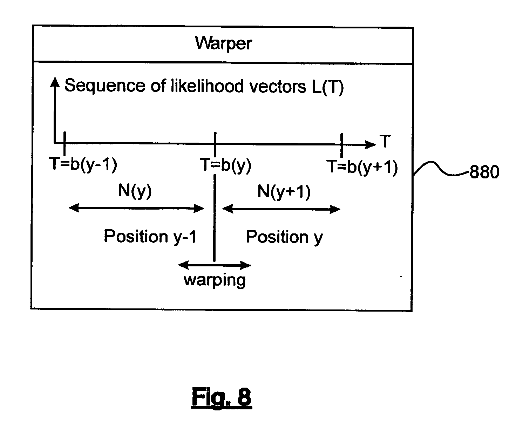

A principle scheme of a warper 180, 780, 880 that for each word model maximizes the match likelihood $M(y-1,y)$ at two adjacent positions $\gamma-1$ and y is shown in Fig. 8. In the warper, a sequence of matching likelihood vectors which relate to constant intervals of time are compared to sub-model vectors $W(y)$. $W(y)$ indicates the distribution, which may mean presence or non-presence, of word sub-models in a respective word model at position y. A single component $W_k(y)$ of $W(y)$ may therefore be understood as indicating the expectation of a certain word sub-model in a word model at position y. In an optimization process, the match likelihood of adjacent word sub-models is maximized by shifting the boundary between these adjacent word sub-models with respect to likelihood vectors of time frames which will be allocated to either the word sub-model at position y-1 or position y.

The maximization operation may be defined by the following equation:

$$M(y\text{-}1,y) = \max_{b(y)}\left\{\sum_{T=b(y-1)}^{b(y)} L(T)W(y-1) + \sum_{T=b(y)+1}^{b(y+1)} L(T)W(y)\right\} \qquad \text{(Equation 1)}$$

As can be seen from equation 1, match likelihood $M(y-1,y)$ is maximized by shifting the boundary $b(y)$ between adjacent word sub-models in steps of single time frames T. For each sub-sequence of likelihood vectors $L(b(y-1))$, ...., $L(b(y))$ and $L(b(y)+1)$, ...., $L(b(y+1))$ the match likelihood for respective sub-models at position $\gamma-1$ and y is calculated as scalar product of each likelihood vector of a sub-sequence with respective sub-model vector $W(y-1)$, or $W(y)$. Sub-model vector $W(y)$ indicates the expectation of word sub-models at position y in a word model. Thus, sub-model vector $W(y)$ has the same dimension as likelihood vector $L(T)$ and the respective components of these vectors relate to the same sub-models.

According to an embodiment of the present invention, one component of $W(y)$ is equal to 1 and all others being 0, which means that the component which is equal to 1 represents the word sub-model at position y. In this case, the scalar product $W(y)L(T)$ is the selection of the respective component of $L(T)$.

According to a further embodiment of the present invention, $W(y)$ represents the distribution of word sub-models as a linear combination of word sub-models at position y. In this case, a component of $W(y)$ indicates whether and how likely a single word sub-model is expected at that position y in a given word model. In this regard, the value of the component of $W(y)$ may also be negative, which indicates that the word sub-model represented by that component shall be not present in the utterance, i.e., the respective component of the likelihood vector shall be close to zero in the utterance under examination.

The above described matching calculation is also carried out for sub-models at other positions in a word model by shifting, e.g., boundaries between positions y+1 and y+2. After calculating, e.g., boundary between positions y+1 and y+2, the maximization operation between positions y and y+1 may be repeated if boundary $b(y+1)$ has changed after the maximization operation at positions y+1 and y+2. The same principle may be applied to determine the outer boundaries of a word model. However, it is also possible to set outer boundaries to a word model at fixed positions or to use a voice activity detector to determine boundaries between words or speech and non-speech signals.

According to another embodiment of the present invention, an expected duration $D(y)$ and its expected variance $e(y)$ of a word model at position y are introduced by means of a unimodal function $f(y)$ into the warping operation using the following equations:

$$M(y-1,y) = \max_{b(y)} \left\{ \sum_{T=b(y-1)}^{b(y)} L(T)W(y-1)f(y-1) + \sum_{T=b(y)+1}^{b(y+1)} L(T)W(y)f(y) \right\}$$

(Equation 2)

Also in equation 2, the warping operation modifies the border b(y) between adjacent word sub-models at positions γ-1 and y. Unimodal function f(y) may be understood as a scalar function meeting a bell curve-like function on the length of each frame sub-sequence for the respective positions y-1 and y. An example for the unimodal function f(y) is shown by the following equation:

$$f(y) = \exp\left(-\left(\frac{b(y)-b(y-1)-D(y)}{e(y)}\right)^2\right)$$

(Equation 3)

In equation 3, b(y) - b(y-1) is the actual length or duration of the sub-sequences of frames allocated to the word sub-model at position γ-1. D(y) is the expected duration of the respective word sub-model at position y. Furthermore, in the equation for calculating unimodal function f(y), e(y) is used as expected variance of the duration of the respective word sub-model at position y.

According to a further embodiment of the present invention, match likelihood M(y-1,y) at adjacent positions y-1 and y is maximized by using a confidence vector c(T). Confidence vector c(T) defines how good the selected matching codebook vectors V1(T), V2(T), ..., match the respective feature vector based on their distances a1(T), a2(T), ..., to the feature vector. As a result, a matching likelihood vector L(T) resulting from matching codebook vectors V1(T), V2(T), ..., which have relative small distances a1(T), a2(T), ..., to the respective feature vector, is weighted stronger in the maximization operation than one resulting from matching codebook vectors having a relatively large distance to the respective feature vector.

According to Fig. 7, the confidence vector c(T) may be generated in likelihood composer 740 for each likelihood vector L(T). For example, if a matching likelihood vector is generated by interpolating the matching codebook vectors, the confidence vector is generated from the distance a1(T) which is taken in proportion to an expected mean distance.

According to an embodiment of the invention, the confidence vector may be determined by the following equation:

$$c(T) = \exp\left(-\left(\frac{a1(T)}{\sigma}\right)^2\right),$$

(Equation 4)

wherein σ is a quantity for the expected variance of the mean distance between a feature vector and the respective codebook vector.

The maximization of M(y-1,y) under consideration of the confidence vector may then be carried out by the following equation:

$$M(y-1,y) = \max_{b(y)} \frac{\left\{ \sum_{T=b(y-1)}^{b(y)} c(T)L(T)W(y-1) + \sum_{T=b(y)+1}^{b(y+1)} c(T)L(T)W(y) \right\}}{\sum_{T=b(y-1)}^{b(y+1)} c(T)}$$

(Equation 5)

Using the unimodal function f(y) in the warping operation allows to improve a maximization of match likelihood by statistical information of each word sub-model. The statistical information such as duration and its expected variance of word sub-models may be gained in a training phase or also during the recognition process itself.

According to an embodiment of the invention, the duration D and its expected variance e is determined for each sub-model in each word model separately, since the duration and its variance deviates for a sub-model from word model to word model.

As another example, Table 2 in Fig. 5 shows how the statistical information for each word sub-model 1, ..., m may be stored in a table. Such a table structure readily allows for the access of statistical information like the expected duration D or its expected variance e by using table 2 as a look-up table.

After the boundaries b between expected sub-models have been determined by dividing the sequence of likelihood vectors in sub-sequences for which match likelihood M(y-1,y) becomes a maximum, word sub-model match likelihoods N(y) for each single position y are determined by means of boundary b(y), so that M(y-1,y)=N(y-1)+N(y), and are merged for all positions y into a word model match likelihood P for the respective word model.

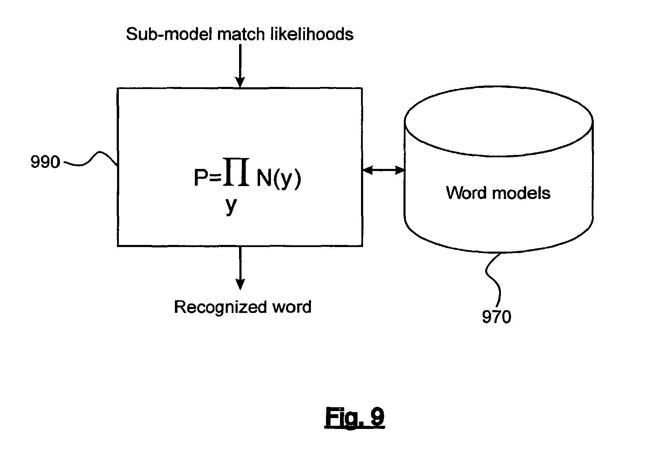

In Fig. 9, a so-called discriminator 990 is shown which merges the sequence of sub-model match likelihoods N(y) into a word model match likelihood P.

Word model match likelihood P may be calculated from sub-model match likelihoods N(y) as a product probability using the equation below:

$$P = \prod_{y=1}^{y_{end}} N(y) . \qquad \text{(Equation 6)}$$

According to another embodiment, word model match likelihood P may be calculated from sub-model match likelihoods N(y) as an arithmetic mean probability using the equation below:

$$P = \frac{1}{y_{end}} \sum_{y=1}^{y_{end}} N(y). \qquad \text{(Equation 7)}$$

Alternatively, word model match likelihood P may also be calculated from sub-model match likelihoods N(y) as a geometric mean using the equation below:

$$P = \sqrt[y_{end}]{\prod_{y=1}^{y_{end}} N(y)} . \qquad \text{(Equation 8)}$$

After word model match likelihood P has been determined for each word model in word model database 990, a recognition result may be determined by selecting the word model with highest word model match likelihood P. According to another embodiment of the present invention, for each word to be recognized a phonetic word model to be used in the recognition operation and a non-phonetic word representation may be stored in database 990 so that as recognition result the non-phonetic word representation corresponding to the recognized phonetic word model is output, e.g., at the output device or may be further processed in a processing system.

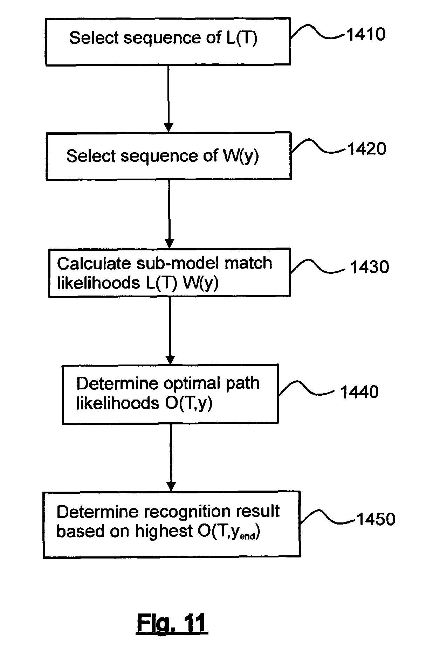

Another embodiment of the present invention will be described with reference to Fig. 11. According to this embodiment, a modified dynamic time warping operation is used to find an optimal path of optimal path likelihoods through a likelihood matrix L(T,y). In operations 1410 and 1420 a sequence of matching likelihood vectors L(T), which is examined to recognize a word model and a sequence of sub-model vectors W(y), which represents a word model to be examined are selected. The matching likelihood vectors are generated as described above in relation to a speech input signal. The sequence of sub-model vectors W(y) is also generated as described above and may be taken from a sub-model vector database (not shown). Then, the likelihood matrix is made up of a scalar product of the sequence of likelihood vectors and the sequence of sub-model vectors W(y) (operation 1430). The components L(T)W(y) of the likelihood matrix L(T,y) are called sub-model match likelihoods at position y and time T. In operation 1440, optimal path likelihoods are calculated from the match likelihoods using the warping operation which is also called back tracking operation. As a result, the word model match likelihood may be derived from the highest optimal path likelihood at last position $y=y_{end}$, since according to the principle of dynamic programming, the optimal path likelihood at position $y=y_{end}$ is also a measure for the optimal path through the matrix and, therefore, for the match likelihood for the word model under examination (operation 1450).

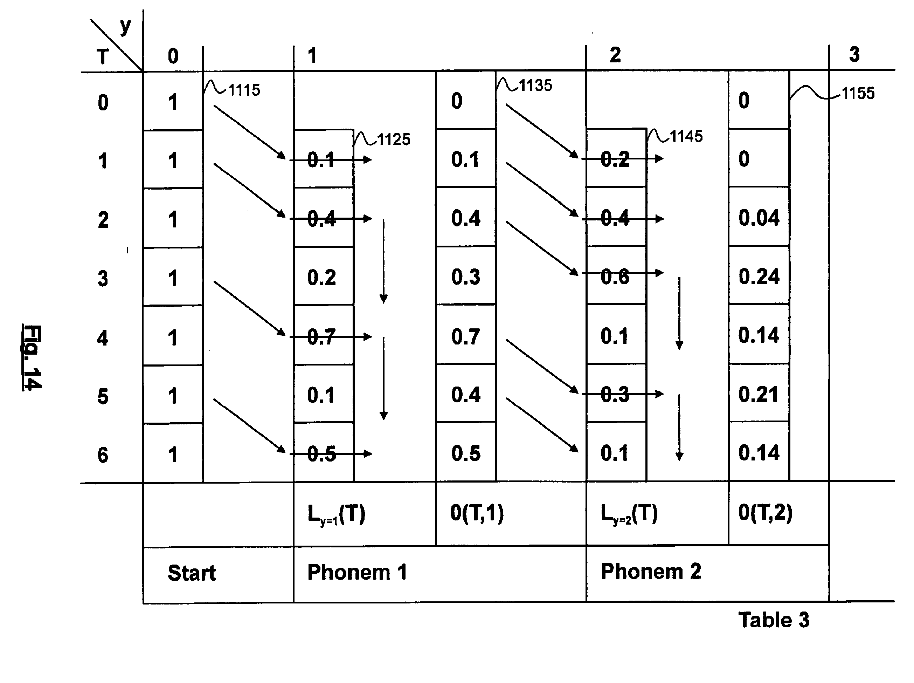

For each succession or sequence of word sub-models forming a word model of a word to be recognized an optimal path through the likelihood matrix L(T,y) is determined starting with L(1, 0) = 1 as a possible entry point. The likelihood matrix L(T,y) is formed from the sequence of matching likelihood vectors relating to the sequence of feature vectors generated from a speech input signal together with a sequence of sub-model vectors W(y), i.e. each component of L(T,y) is the result of scalar product L(T)W(y) for a certain T and y. Fig. 14 shows by way of example columns $L_{y=1,2}$(T) (reference numerals 1125, 1145) of likelihood matrix L(T,y).

With dynamic time warping or dynamic programming the optimality principle is established which means that after determining an optimal path likelihood for each position (T,y) also the optimal path through the likelihood matrix L(T,y) is found because of the principle that an optimal process is composed of partial processes which are also optimal. This means that the optimal path likelihood at position y = $y_{end}$ defines the optimal path through L(T,y) and further indicates the optimality of the whole sequence of likelihood vectors with respect to a sequence of sub-model vectors W(y).

Optimal path likelihood O(T,y) at a position (T,y) in matrix L(T,y) is determined by selecting the higher of the path likelihoods resulting from a transition from position (T-1, y) or position (T-1, y-1) to the present position (T,y). Thus, a so-called back tracking operation, which will be described next in more detail, is used to determine an optimal path likelihood at a present position from optimal path likelihoods at former positions for which the optimization operation has already been carried out, and the sub-model match likelihoods L(T)W(y).

The highest optimal path likelihood at position y may be understood as corresponding to the sequence of sub-model match likelihoods N(1), ..., N(y) described above. Both the highest optimal path likelihood at position y and the sequence of sub-model match likelihoods N(1), ..., N(y) represents the match likelihood for a sequence of word sub-models: sub-model(1), ..., sub-model(y).

According to an embodiment of the invention, optimal path likelihoods are determined through the matrix L(T, y) in a frame sequence for T = 1, ...., $T_{end}$ and for all positions y = 1 to $y_{end}$.

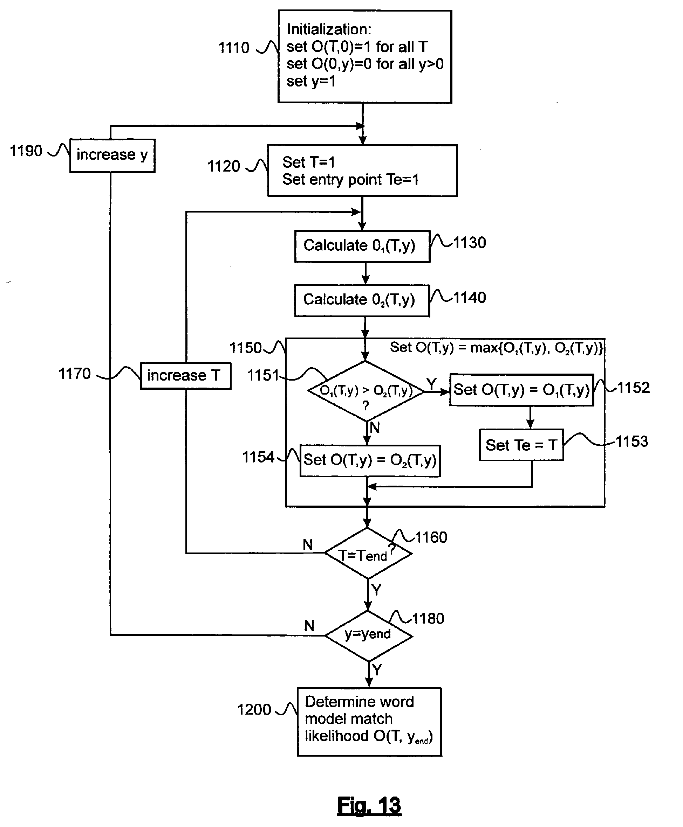

Fig. 13 is a flow diagram showing the principle of an embodiment according to the present invention in which such optimal path likelihoods O(T,y) are generated from components of L(T)W(y). Optimal path likelihood O(T,y) is initialized by O(T,0) = 1 for all T and O(0,y) = 0 for all y > 0 in operation 1110. A so called backtracking operation then starts at position y = 1 and time frame T = 1. In operation 1120, a possible entry point Te is set equal to 1. Then, it is determined on which path the optimal path likelihood O(T,y) at present position (T,y) can be achieved. In operation 1130, the one possible first path is to enter the present position T = 1 and y = 1 from the position T = 0 and y = 0 and to determine the path likelihood $O_1$(T,y) by multiplying components of L(T)W(y) on both positions which may be formularized by the following equation:

$$O_1(T,y) = O(T-1,y-1)L(T,y) \qquad \text{(Equation 9)}$$

The other possible second path is to follow the row or column of components L(T)W(y) at position y (in the first loop y is set equal to 1) starting from entry point Te to the present frame at time T. The path likelihood $O_2$(T,y) for this second path is then calculated in operation 1140 by summing up the components L(T)W(y) on this path Te, ..., T, and multiplying this sum with the optimal path likelihood O at position (Te-1,y-1) as may be formularized by the following equation:

$$O_2(T,y) = O(Te-1,y-1)f(T-Te) \sum_{Ti=Te}^{T} L(Ti)W(y). \qquad \text{(Equation 10)}$$

The calculation of path likelihoods $O_1$(T,y) or $O_2$(T,y) in operation 1130 and 1140 may be done sequentially or in parallel. According to an embodiment, f(T-Te) is used in the calculation of $O_2$(T,y) (operation 1140) as a scaling factor and is defined by f(T-$T_e$) = 1/(T-Te). However, according to a another embodiment, f(T-Te) may also be set equal to 1 and, therefore, can be left out in equation 10.

In operation 1150 it is decided which of the two path likelihoods $O_1$(T,y) or $O_2$(T,y) are higher and, then, the optimal path likelihood O(T,y) is set to the higher path likelihood, either $O_1$(T,y) or $O_2$(T,y) at the present position as may be formularized by the following equation:

$$O(T,y)=\max\{O_1(T,y),O_2(T,y)\} \qquad \text{(Equation 11)}$$

In more detail, operation 1150 may be described as follows. In a decision operation 1151, it is decided which of the two path likelihoods $O_1(T,y)$ or $O_2(T,y)$ are higher. If path likelihood $O_1(T,y)$ is the higher one, then optimal path likelihood $O(T,y)$ is set to the value of $O_1(T,y)$ in operation 1152. If the first path is taken which means that $O_1(T,y)$ is higher than $O_2(T,y)$, entry point Te is set equal to present T in operation 1153. If path likelihood $O_2(T,y)$ is higher than $O_1(T,y)$, then optimal path likelihood $O(T,y)$ is set to the value of $O_2(T,y)$ in operation 1154.

In operation 1160, it is checked whether the last frame $T_{end}$ has been reached and, if this is not the case, optimal path likelihood is then determined for next time T for the same position y by increasing T by 1 (operation 1160 and 1170).

Otherwise, if $T = T_{end}$, optimal path likelihoods are determined for next position y by increasing y in operation 1190 and starting again with T = 1, and also by setting entry point Te = 1 in operation 1120. The operations to determine optimal path likelihoods as described above are repeated until an optimal path likelihood is calculated for all positions (T,y). If then, in operation 1180, it is determined that $y = y_{end}$, the warping or backtracking operation for the likelihood matrix L(T,y) is completely carried out and the optimal path matrix O(T,y) is completed.

In operation 1200, word model match likelihood of the word model represented by the sequence of sub-models at positions y, y = 1, ...., $y_{end}$ is equated with the highest optimal path likelihood $O(T,_{yend})$ at position $y_{end}$. According to the principle of dynamic programming, highest optimal path likelihood O at last position $y_{end}$ represents the optimal path for the whole sequence of sub-models under examination, since according to the principle of dynamic programming the highest optimal path likelihood at position $y_{end}$ characterizes the optimal path through the likelihood matrix L(T,y) and, therefore, is necessarily also a measure of word model match likelihood of a word model which is composed of the sequence of word sub-models under examination.

In a further operation, further word model match likelihoods for other word models and/or for new sequences of matching likelihood vectors may be determined by the method described above. For that, operations 1430 to 1450 are repeated for new combinations of sequences of L(T) and W(y).

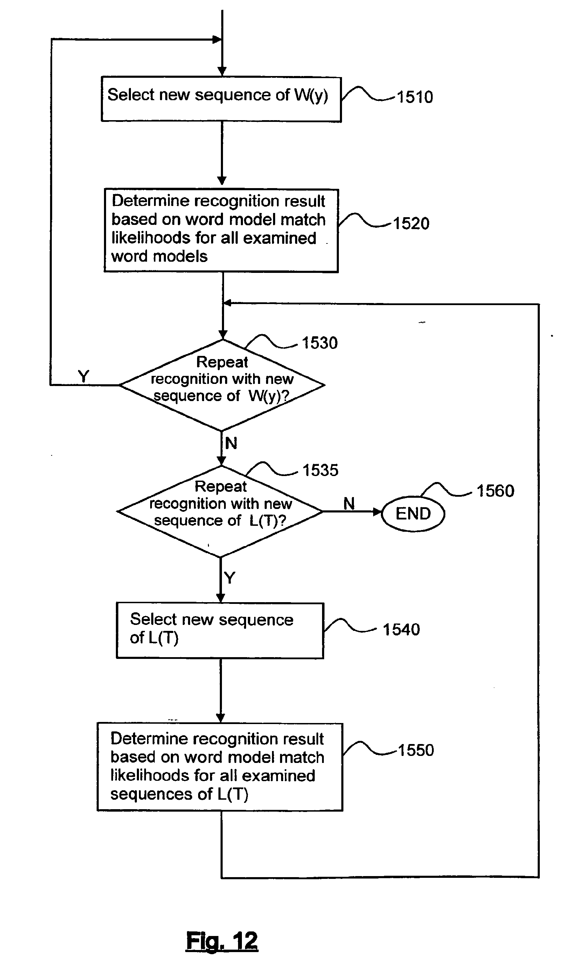

According to an embodiment of the present invention as illustrated in Fig. 12, a new sequence of sub-model vectors W(y) is selected which represents a another word model to be examined (operation 1510). In operation 1520, first a new word model match likelihood is calculated by repeating operations 1430 and 1440 with the present sequence of L(T) and the new sequence of W(y). Then, a recognition result for the present sequence of L(T) and the new sequence of W(y) may be determined based on this new word model match likelihood. Also in operation 1520, the recognition result may also be determined by comparing that new word model match likelihood $O(T,y_{end})$ with the word model match likelihoods of previously determined optimal paths. With that, the best matching word model match likelihood is determined for a given sequence of matching likelihood vectors L(T) and several word models represented by their corresponding sub-model vector sequences W(y). Then, in operation 1530, a decision is made whether a new sequence of W(y) is to be selected and operations 1510 and 1520 will be repeated or not. For example, decision operation 1530 branches back to operation 1510 if an internal threshold condition for the word model match likelihood has not yet been met or if all relevant word models have not yet been tested one after another with present sequence of L(T). If all relevant or existing sequences of W(y) have been tested with the present sequence of L(T), then operation 1530 branches to next decision operation 1535. In operation 1535, it is then decided, whether a final recognition result has been determined or whether the recognition operation is repeated with a new sequence of L(T). The decision may depend on the threshold condition for the word model match likelihood, which means that if the best matching word model match likelihood determined in operation 1510 to 1530 is under a certain value, then the recognition operation is continued with operation 1540. Otherwise, if the recognition criteria are met, then a final recognition result has been determined and the recognition process is finished in operation 1560.

If it is decided in operation 1535 to continue the recognition operation with present sequence of W(y) and a new sequence of matching likelihood vectors L(T), e.g., representing a reduced, enlarged or even complete new portion of input speech samples, it is branched to operation 1540. In operation 1540, this new sequence of matching likelihood vectors L(T) is selected. Then, a new word model match likelihood is calculated by repeating operations 1430 and 1440 with the new sequence of L(T) and present sequence of W(y) in operation 1550. Thus, recognition result for the new sequence of L(T) and present sequence of W(y) is determined based on this new word model match likelihood in operation 1550. As already described in operation 1520, also in operation 1550, the recognition result may be determined by comparing that new word model match likelihood $O(T,y_{end})$ with word model match likelihoods of previously determined optimal paths. Thus, a recognition result may be determined considering different portions of input speech samples and comparing optimal path likelihoods for these portions with respect to a word model. After operation 1550 is executed, recognition operation is continued with operation 1530. In operation 1530, again it is decided whether a further recognition cycle with a new sequence of W(y) (operations 1510 and 1520) is to be carried out or whether it is branched to decision operation 1535. In operation 1535, it is again decided whether a final recognition result is determined for a given speech input signal (operation 1560), or whether a new sequence of L(T) is to be selected and operations 1540 and 1550 will be repeated.

According to another embodiment of the present invention, the dwell time $T_d$ of the optimal path at one position y is further used to influence the calculation of the optimal path likelihoods O(T,y) by function f(T-Te) being a unimodal function. For example, unimodal function f is a normal distribution like function, e.g., a bell curve, depending on the dwell time $T_d$ = T-Te of the optimal path at one and the same position y. This means that the sum of the match likelihoods on one position y in the calculation of $O_2(T,y)$ (operation 1140) is rated by unimodal function $f(T_d)$ in a manner that relatively short and long dwell times are punished by lowering the path likelihood. In contrast to that, a mean dwell time may be rewarded by increasing the path likelihood at the respective place (T,y). For example, the mean dwell time corresponds to the duration D which belongs to the sub-model on the present position y.

Then, optimal path likelihoods O(T,y) may be calculated by using the following equations:

$$O_1(T,y) = f(0)O(T-1,y-1)L(T,y) \text{ and } Te = T;$$

$$O_2(T,y) = O(T-1,y-1)f(T_d) \sum_{Ti=Te}^{T} L(Ti)W(y);$$

; and, then

$$O(T,y)=\max\{ O_1(T,y),O_2(T,y)\} \qquad\qquad \text{(Equation 12)}.$$

Table 3 in Fig. 14 shows a numerical example of how an optimal path through a likelihood matrix is calculated using the method described with respect to Figs. 11 and 13. The first column 1115 at position y = 0 contains the initialization values O(T,0) = 1 as set in operation 1110 in Fig. 13. The next right-hand column 1125 at position y = 1 contains the match likelihood values for the sub-model or phonem 1 at position y = 1 and is indicated as $L_{y=1}(T)$. According to operations 1130, 1140 and 1150 the column 1135 of optimal path likelihoods O(T,1) is calculated. The diagonal lines from column 1115 to column 1125 show possible entry points Te. A horizontal arrow in column 1125 shows that an entry point is taken, the respective value for the path likelihood $O_2(1,1)$ is calculated according to the equation in operation 1140 and this path path likelihood $O_2(1,1)$ is set as optimal path likelihood O(1,1) in operation 1154 according to the decision made in operation 1151. If an entry point is not taken because of the decision made in operation 1151, a vertical arrow next to column 1125 shows that the respective optimal path likelihood, e.g. O(3,1) = 0.3 is set to the value of path likelihood $O_1(3,1)$ (operation 1152) calculated in operation 1130 and the decision made in operation 1151 (without unimodal term in function f). If optimal path likelihood O(3,1) is set to the value of $O_1(3,1)$, then entry point Te is set equal to T=3 in operation 1153. After the column 1135 of optimal path likelihoods O(T,1) has been calculated, its values are used as entry point path likelihood O(T-1,y-1) in operation 1130 to calculate next column 1155 of optimal path likelihoods O(T,2).

The dwell time $T_d$ = T-Te may also be calculated from Table 3, e.g., by considering the vertical and horizontal arrows next to the columns of likelihood vector components $L_y(T)$. For example, the dwell time vector at position y=1 would be {0; 0; 1; 0; 1; 0} and at position y=2 {0; 1; 2; 3; 0; 1} for T = 1, ..., 6.

In Table 3, optimal path likelihood O (3,2) = 0.5 is the highest optimal path likelihood at position y = 2 and, therefore, would also be the word model match likelihood if the examined word model would only have two word sub-models, namely phonem 1 and 2 and y = 2 would therefore be $y_{end}$.

Thus, it is possible to define the optimal path through the likelihood matrix L(T,y) by determining the highest optimal path likelihood O at position y = $y_{end}$ which corresponds to the word model match likelihood for the word model under examination.

To determine a recognition result, the highest word model match likelihood of all word models under consideration is searched.

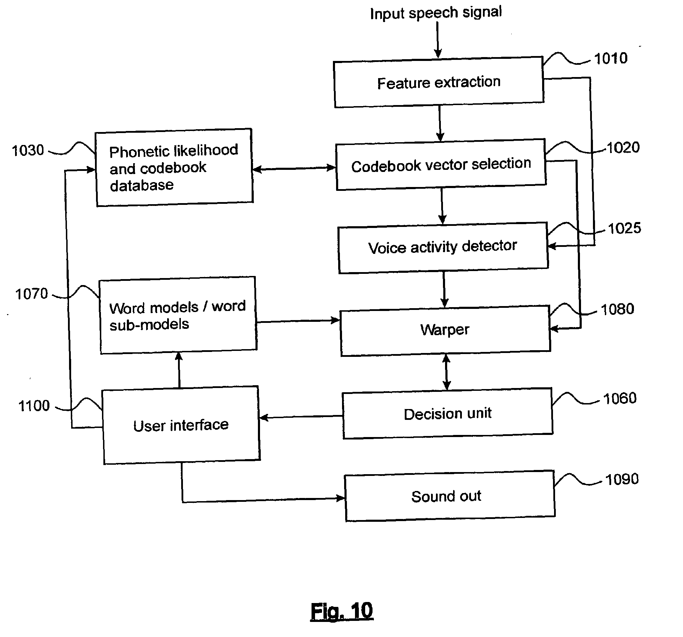

Fig. 10 shows a block diagram which illustrates a system and a method according to an embodiment of the present invention. A microphone (not shown) records an input speech signal that contains spoken words. However, the input speech signal can also be received from a sound card which e.g. also makes an automatic gain control (AGC) in response to a voice activity information which will be described below. Frames of recorded or received signal samples are then received by feature extraction unit 1010. Feature extraction unit 1010 generates a signal spectrum from each provided speech signal frame and provides for each frame a feature vector to the codebook vector selection unit 1020. Before feature extraction taking place in feature extraction unit 1010, the speech input sample may first lead to a noise cancellation unit (not shown) to reduce noise from the input speech signal. The feature extraction unit 1010 may further provide loudness information which is used in voice activity detector 1025 which will be described below. Each feature vector from the sequence of feature vectors provided by the feature extraction unit 1010 is compared against codebook vectors in the codebook vector selection unit 1020. The codebook vectors to which the feature vectors are compared are provided by a codebook database 1030. As a result of the comparison, codebook vector selection unit 1020 determines one or more codebook vectors which match with the examined feature vector. For these matching codebook vectors, associated likelihood vectors are fetched from phonetic likelihood database 1030 and are provided to the voice activity detector 1025 or warper 1080. In an embodiment in which a voice activity detector 1025 is implemented, voice activity detector 1025 decides by means of likelihood distribution in likelihood vectors received from codebook vector selection unit and loudness information received from feature extraction unit 1010 whether a corresponding feature vector contains speech data or not. However, according to an embodiment of the present invention the voice activity detector 1025 is omitted and likelihood vectors are directly provided from the codebook vector selection unit 1020 to warper 1080. Warper 1080 has access to phonetic word models divided into word sub-models which are stored in a word model/word sub-model database 1070. Then, a warping operation is carried out by which it is examined how a sequence of word sub-models fits to a sequence of phonetic likelihoods in a sequence of components of likelihood vectors. This warping operation is carried out for a plurality of word models and the fitting or warping result for each word model is provided to decision unit 1060. In case that the codebook vector selection unit also provides reliability information as a result of the comparison by means of a confidence vector or the like. Such a confidence vector states how well a codebook vector matches a respective feature vector and therefore provides the warper with the information as to how trustworthy the likelihood values are in the components of the likelihood vector to which the confidence vector corresponds. The warper then may weight the likelihood values with respective components of the corresponding confidence vector in the warping operation to rely more on likelihood values which better match a respective feature vector than others. A decision unit 1060 which may be part of the warper 1080 receives warping results from the warping unit for a plurality of word models and from which the best matching word model is selected. The best matching word model is the word model with the highest word model match likelihood. This match likelihood for a word model may also be called "fit-quality-info". Decision unit 1060 further communicates with user interface 1100. User interface 1100 may comprise a configuration unit and a display unit which enables the user to interact with the system. The word model with the highest match likelihood is regarded as the recognition result by the user interface 1100 and transformed in an output format, e.g., an orthographic word representation may be displayed on the display unit or used to output waves by the sound-out unit 1090 which may also be a part of the user interface 1010. Sound-out unit 1090, for example, may be implemented as a loudspeaker.

Phonetic likelihood and codebook database 1030, word model and sub-model database 1070 and user interface 1010 are so-called off-line units whereas the remaining units of the system are directly implemented in the data flow of the speech signals during recognition operations.

The user interface 1100 sends in an off-line mode orthographic words to be recognized to the word model/ word sub-model database 1070 where the orthographic words are transformed to phonetic word models consisting of word sub-models. For a transformation, a rule-based phonetic spelling is used by which single letter or sequences of letters are mapped to phonetic word sub-models. The orthographic words to be recognized may be input by the user, e.g. by typing the word on a keyboard of the user interface.

The transformation of orthographic words input by the user to a phonetic representation of word models may also be done in an off-line mode.

In the phonetic likelihood and codebook database 1030, a codebook and a corresponding likelihood vector set is stored. For example, database 1030 contains spoken words of a plurality of speakers and respective phonetic labeling information with which language dependent codebook vector sets may be provided to the codebook vector selection unit 1020. The selection of the language is caused by the user via the user interface and is also to be done in an off-line mode.

An example of a phonetic likelihood and codebook database comprising a table containing labeling information and at least one codebook vector set with an associated likelihood vector set is described above with respect to table 2 in Fig. 5.

Following, a method according to the present invention for deriving a likelihood vector set for use in speech recognition based on phonetic word models comprising a sequence of word sub-models will be described. According to the present invention, a likelihood vector is determined for each vector in the codebook. To do so, first a plurality of words has to be segmented each into a sequence of word sub-models so that for each word under examination a word model comprising a sequence of word sub-models exists. This segmentation may be done by hand or by using a segmentation method based on a given word sub-model alphabet as known in the art.

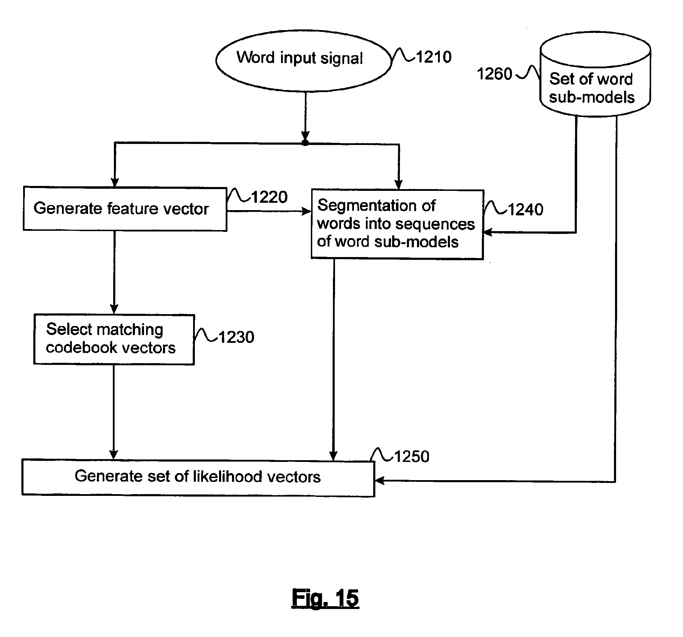

In Fig. 15, the segmentation is done in operation 1240 having so called carrier words as word input signals (operation 1210). The segmentation itself is done by subdividing that carrier words into subparts and representing that subparts by word sub-models which may be taken from word sub-model database 1260. In a parallel or successive operation 1220, that carrier words are subdivided into a sequence of frames and for each frame a feature vector is generated as described above.

For each feature vector at least one matching codebook vector is selected in operation 1230. A set of likelihood vectors is then generated in operation 1250 by generating a likelihood vector for each codebook vector. The likelihood vectors have a dimension equal to the length of the sub-model alphabet stored in sub-model database 1260 so that a single component of a likelihood vector corresponds to a respective sub-model in the sub-model alphabet. Is a codebook vector determined to be matching codebook vector in operation 1230, that component of the associated likelihood vector is increased by a certain value which indicates the likelihood for the utterance of word sub-model to which the respective feature vector has been associated in segmentation operation 1240.

After a plurality of words comprising significant words or so-called carrier words have been analyzed, a set of likelihood vectors relating to the phonetic alphabet or set of word sub-models is generated and may be used in a speech recognition method or system according to the present invention. Each component shows the likelihood for the utterance of a respective word sub-model when the associated codebook vector matches the respective feature vector.

Before using the likelihood vector set the component values may be normalized using a normalization or scaling method known in the art.

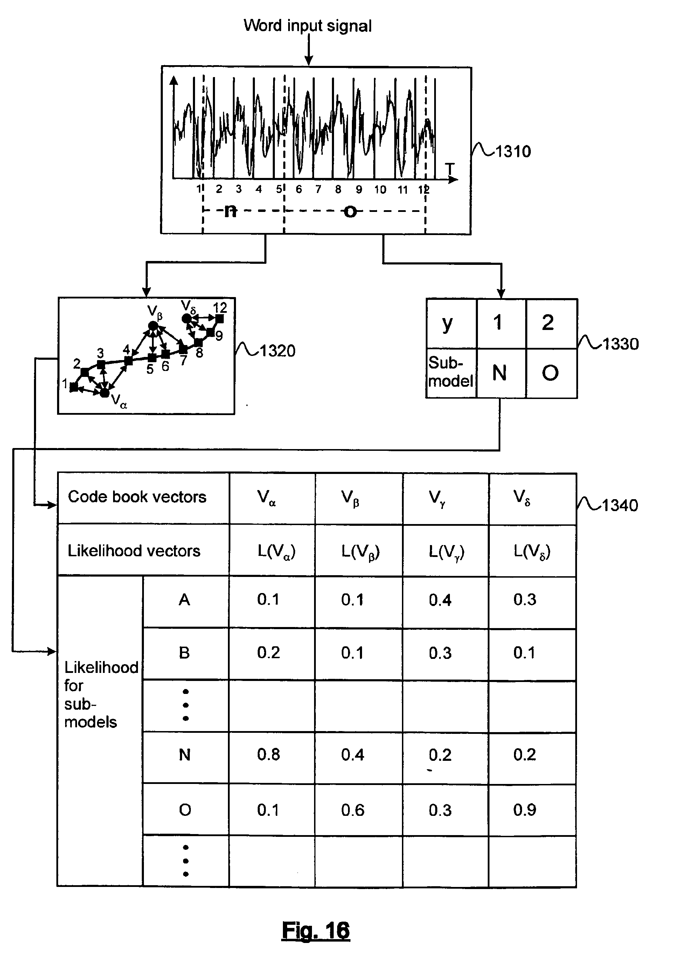

In Fig.16, a part of the method for deriving a likelihood vector set is shown using a simplified example. An input speech or word signal is input to a segmentation unit or operation 1310 where the input speech signal is divided into a sequence of feature vectors and further segmented into two word sub-models "n" and "o".

In the next selection unit or operation 1320, for each feature vector U(T), with T = 1 to 12, a matching codebook vector $V_\alpha$, $V_\beta$ or $V_\delta$ is selected. From the sequence of matching codebook vectors and the sequence of word sub-models which are stored in table 1330 the set of likelihood vectors is generated as illustrated in table 1340. The first row in table 1340 labels codebook vectors and the second row labels the likelihood vectors associated to the respective codebook vectors. The following rows show components of the respective likelihood vectors for selected word submodels, e.g., "A","B", "N" or "O". The component values are the likelihood for the utterance of the respective word sub-model when the associated codebook vector is selected as matching codebook vector. For example, the likelihood for the utterance of sub-model "N" is 0.8 if codebook vector $V_\alpha$ is selected as matching codebook vector.

It is clear for a person skilled in the art that embodiments described with respect to the Figs. of the present invention may possibly be simplified in order to better describe the key features of the invention.

According to further embodiments of the invention, embodiments or features of embodiments described above may be combined in any combination useful in speech recognition.

In the preceding text and in the claims that follow, the phrases "warping", "dynamic time warping (DTW)", "dynamic programming" or "backtracking" have been used to include all methods used in the art of speech processing for optimally time aligning a sequence of frame based likelihoods against a sequence of word sub-models according to the present invention. The phrase is meant to include both the Viterbi algorithm and the Baum-Welsh algorithm, even though purists consider the Baum-Welsh algorithm to be "dynamic-programming-like" rather than an actual dynamic programming algorithm.

It should also be understood that, in the text that precedes and in the claims that follow, description is made of receiving a sequence of frames associated with the utterance of a given word. It is to be understood that in this sense the term "word" is meant to include not only words, but also syllables and also any sequence of words which are spoken together as a single utterance.

Furthermore, it is apparent to one skilled in the art that features described in this specification or in the claims that follow, even if not explicitly described, may be claimed in any combination useful in speech recognition.

**Claims**

1. A method for speech recognition using phonetic word models comprising sub-models, wherein said method comprises:

   - generating (310) feature vectors from frames of an input speech signal;
   - generating (320) a matching likelihood vector for each of said feature vectors, wherein each component of said likelihood vector is the likelihood for an utterance of a respective word sub-model;
   - determining a recognition result (340) by determining a best matching word model by warping (330) a sequence of matching likelihood vectors to sequences of sub-models of word models to be recognized; and

   wherein each sub-model to be recognized is identified by its position y in a word model of a word to be recognized and the method further comprises:

   maximizing match likelihood of word sub-models at adjacent positions by determining frame based boundaries between successive word sub-models using a warping operation based on sequences of said matching likelihood vectors of said frames and expectations of word sub-models at respective positions.

2. The method of claim 1 using a codebook comprising codebook vectors as representative vectors in feature space, wherein the method further comprises:

   - comparing said feature vectors with said codebook vectors;
   - selecting at least one matching codebook vector for each feature vector;
   - generating said matching likelihood vector from likelihood vectors associated to said matching codebook vectors.

3. The method of claim 2, wherein said matching likelihood vector is generated by interpolating said likelihood vectors associated to said matching codebook vectors according to the distances between the feature vector and said matching codebook vectors.

4. The method of one of claims 1 to 3, wherein said match likelihood M(y-1 ,y) is maximized by using the formula:

$$M(y-1,y) = \max_{b(y)} \left\{ \sum_{T=b(y-1)}^{b(y)} L(T)W(y-1) + \sum_{T=b(y)+1}^{b(y+1)} L(T)W(y) \right\}$$

wherein L(T) is said matching likelihood vector at time T, W(y) is a sub-model vector at position y and b is said frame based boundary.

5. The method of claim 4, wherein for each word sub-model an expected duration D(y) and its expected variance e(y) is used in said match likelihood maximization to improve said boundary determination, wherein said match likelihood M(y-1 ,y) is maximized by means of an unimodal function f(y) using said duration D(y) and said variance e(y) in formula:

$$M(y-1,y) = \max_{b(y)} \left\{ \sum_{T=b(y-1)}^{b(y)} L(T)W(y-1)f(y-1) + \sum_{T=b(y)+1}^{b(y+1)} L(T)W(y)f(y) \right\}$$

with

$$f(y) = \exp\left( -\left( \frac{b(y)-b(y-1)-D(y)}{e(y)} \right)^{2} \right).$$

6. The method of one of claims 1 to 5, wherein said matching likelihood vectors are weighted by a confidence vector c(T) in said warp operation and said maximizing match likelihood of word sub-models is specified by:

$$M(y-1,y) = \max_{b(y)} \frac{\left\{ \sum_{T=b(y-1)}^{b(y)} c(T)L(T)W(y-1) + \sum_{T=b(y)+1}^{b(y+1)} c(T)L(T)W(y) \right\}}{\sum_{T=b(y-1)}^{b(y+1)} c(T)}$$

7. The method of claim 6, wherein said confidence vector being determined by the following function using a distance a(T) between said feature vector and said respective matching likelihood vector:

$$c(T) = \exp\left(-\left(\frac{a(T)}{\sigma}\right)^2\right),$$

wherein $\sigma$ is a quantity for the expected variance of the a(T) distribution.

8. The method of one of the preceding claims, wherein said method further comprises:

   - determining maximized sub-model match likelihoods N(y) from maximized match likelihoods M;
   - merging said maximized sub-model match likelihoods for all positions y to a word model match likelihood P;
   - determining said recognition result by determining a word which corresponds to the word model with highest P.

9. The method of claim 8, wherein said word model match likelihood P is calculated from sub-model match likelihoods N(y) as

   - a product probability using the equation: $P = \prod_{y=1}^{y_{end}} N(y)$; or

   - as an arithmetic mean probability using the equation: $P = \frac{1}{y_{end}} \sum_{y=1}^{y_{end}} N(y)$; or

   - as a geometric mean using the equation: $P = \sqrt[y_{end}]{\prod_{y=1}^{y_{end}} N(y)}$.

10. The method of one of the claims 1 to 3, wherein for each word sub-model a sub-model vector W(y) is provided and the method further comprises:

    a) selecting a sequence of said matching likelihood vectors L(T);
    b) selecting a sequence of said sub-model vectors W(y) representing a word model to be examined;
    c) calculating a likelihood matrix L(T,y) with sub-model match likelihoods L(T,y)=L(T)W(y);
    d) determining an optimal path O(T,y) through said likelihood matrix using dynamic programming;
    e) determining said recognition result based on word model match likelihood $O(T,y_{end})$ of said optimal path.

11. The method according to claim 10, wherein determining said optimal path by calculating said optimal path likelihoods O(T,y) further comprising:

    - calculating path likelihood $O_1(T,y) = 0(T-1,y-1)L(T,y)$;

    - calculating path likelihood $O_2(T,y) = O(Te-1, y-1) \sum_{Ti=Te}^{T} L(Ti)W(y)$;

    - setting optimal path likelihood O(T,y) to the higher path likelihood $O_1(T,y)$ or $O_2(T,y)$.

12. The method of claim 11, wherein a dwell time Td = T-Te is used in said calculation operation of path likelihood $O_2$(T,y), and said method further comprises:

    - calculating path likelihood $O_2(T,y) = O(Te-1, y-1)f(T-Te) \sum_{Ti=Te}^{T} L(Ti)W(y)$, with f(T-Te) being a scaling function f(T-Te) = 1/(T-Te) and/or a unimodal distribution function;
    - setting Te equal to T, if $O_1(T,y)$ is higher than $O_2(T,y)$;
    - calculating next optimal path likelihood O(T+1,y) or, if T = Tend, then 0(1,y+1).

13. The method of one of claims 10 to 12, wherein said method is repeated with a new sequence of said sub-model vectors W(y) and/or a new sequence of said matching likelihood vectors L(T) representing a word model to be examined and said method further comprises:

f) selecting a new sequence of said sub-model vectors W(y) representing a another word model to be examined;
g) repeating operations c) to e), wherein in operation e) said recognition result is determined based on the word model match likelihood $O(T, y_{end})$ of previously determined optimal paths;
and/or
h) selecting a new sequence of likelihood vectors L(T);
i) repeating operations b) to e) or b) to g), wherein in operation e) said recognition result is determined based on the word model match likelihood $O(T, y_{end})$ of at least some of said determined optimal paths.

14. The method for speech recognition according to one of claims 1 to 13 based on phonetic word models comprising sequences of word sub-models, wherein generating a matching likelihood vector further comprises:

- segmenting a plurality of words into a sequence of word sub-models;
- generating a sequence of feature vectors for each of said sequence of word sub-models;
- selecting at least one matching codebook vector for each feature vector;
- generating a set of likelihood vectors, each likelihood vector is associated with a codebook vector, wherein the components of said likelihood vectors are the likelihood for the utterance of one of said word sub-models if said associated codebook vector is said matching codebook vector.

15. The method of claim 14, wherein said word sub-models are e.g. phonemes, diphones or syllables and each sub-model further indicates its averaged temporal duration and its variance.

16. The method of claim 15, wherein said plurality of words first being divided into one or more syllables and for each syllable a syllable model is created and for each of said syllable models a sequence of word sub-models is determined.

17. The method of claim 16, wherein said word sub-models are e.g. phonemes or diphones and each sub-model further indicates its averaged temporal duration and its variance.

18. A computer program product comprising computer program code which when executed on a computer enables said computer to carry out a method according to one of claims 1 to 17.

19. Speech recognition system (100) using phonetic word models comprising sub-models, wherein said system comprises:

- a feature generator (110) for generating feature vectors from frames of input signals;
- a feature comparator (120) for selecting at least one matching codebook vector from a codebook (130) for each feature vector;
- a likelihood composer (140) for generating a matching likelihood vector from said codebook vectors;
- a likelihood comparator (160) for determining a recognition result by determining a best matching word model by warping a sequence of matching likelihood vectors to sequences of sub-models of word models to be recognized; and

wherein said likelihood comparator comprises a warper (180, 880) for maximizing match likelihood of word sub-models at adjacent positions by determining frame-based boundaries between successive word sub-models using a warping operation based on sequences of said matching likelihood vectors of said frames and expectations of word sub-models at respective positions, wherein each sub-model to be recognized is identified by its position y in a word model of a word to be recognized.

20. The speech recognition system of claim 19, being implemented in a digital signal processing system (200) comprising:

a processing unit and a storage unit;

- said processing unit is adapted to generate in response to instructions stored in said storage unit said feature vectors from frames of an input speech signal;
- said processing unit is further adapted to generate in response to instructions stored in said storage unit said at least one matching likelihood vector for each of said feature vectors, wherein each component of said likelihood vector is the likelihood for an utterance of a respective word sub-model;

- said processing unit is further adapted to determine in response to instructions stored in said storage unit said recognition result; and
- said processing unit is further adapted to maximize said match likelihood.

21. The speech recognition system of claim 20, wherein said processing unit generates in response to instructions stored in said storage unit said matching likelihood vector from codebook vectors having associated likelihood vectors, and in which said storage unit further comprises:

- a volatile memory (270) storing said instructions, said matching likelihood vectors (272, 274, 275) and word sub-models (278, 279) of a word to be recognized;
- a first non-volatile memory (240) storing a codebook and an associated likelihood vector set; and
- a second non-volatile memory (280) storing said word models and sub-models.

**Patentansprüche**

1. Verfahren zur Spracherkennung unter Verwendung phonetischer Wortmodelle mit Untermodellen, wobei das Verfahren Folgendes aufweist:

- Erzeugen (310) von Merkmalsvektoren aus Frames eines eingegebenen Sprachsignals;
- Erzeugen (320) eines passenden Wahrscheinlichkeitsvektors für jeden der Merkmalsvektoren, wobei jede Komponente des Wahrscheinlichkeitsvektors die Wahrscheinlichkeit für eine Aussprache eines jeweiligen Wortuntermodells ist;
- Bestimmen eines Erkennungsergebnisses (340) durch Bestimmen eines am besten passenden Wortmodells durch Verzerren (Warping) (330) einer Sequenz von passenden Wahrscheinlichkeitsvektoren mit Sequenzen von Untermodellen von zu erkennenden Wortmodellen; und

wobei jedes zu erkennende Untermodell durch seine Position y in einem Wortmodell eines zu erkennenden Worts identifiziert wird und das Verfahren weiterhin Folgendes aufweist:

Maximieren einer Passwahrscheinlichkeit von Wortuntermodellen an benachbarten Positionen durch Bestimmen von Frame-basierenden Grenzen zwischen aufeinanderfolgenden Wortuntermodellen unter Verwendung einer Verzerrungsoperation basierend auf Sequenzen der passenden Wahrscheinlichkeitsvektoren der Frames und Erwartungen von Wortuntermodellen an jeweiligen Positionen.

2. Verfahren nach Anspruch 1, das ein Codebuch mit Codebuchvektoren als repräsentative Vektoren in einem Merkmalsraum verwendet, wobei das Verfahren weiterhin Folgendes aufweist:

- Vergleichen der Merkmalsvektoren mit den Codebuchvektoren;
- Auswählen von wenigstens einem passenden Codebuchvektor für jeden Merkmalsvektor;
- Erzeugen des passenden Wahrscheinlichkeitsvektors aus Wahrscheinlichkeitsvektoren, die zu den passenden Codebuchvektoren gehören.

3. Verfahren nach Anspruch 2, wobei der passende Wahrscheinlichkeitsvektor durch Interpolieren der zu den passenden Codebuchvektoren gehörenden Wahrscheinlichkeitsvektoren gemäß den Abständen zwischen dem Merkmalsvektor und den passenden Codebuchvektoren erzeugt wird.

4. Verfahren nach einem der Ansprüche 1 bis 3, wobei die Passwahrscheinlichkeit M(y-1,y) unter Verwendung der folgenden Formel maximiert wird:

$$M(y-1,y) = \max_{b(y)}\left\{\sum_{T=b(y-1)}^{b(y)} L(T)W(y-1) + \sum_{T=b(y)+1}^{b(y+1)} L(T)W(y)\right\}$$

wobei L(T) der passende Wahrscheinlichkeitsvektor zu einer Zeit T ist, W(y) ein Untermodellvektor bei einer Position y ist und b die auf einem Frame basierende Grenze ist.

5. Verfahren nach Anspruch 4, wobei für jedes Wortuntermodell eine erwartete Dauer D(y) und seine erwartete Varianz e(y) bei der Passwahrscheinlichkeits-Maximierung verwendet wird, um die Grenzenbestimmung zu verbessern, wobei die Passwahrscheinlichkeit M(y-1,y) mittels einer unimodalen Funktion f(y) unter Verwendung der Dauer D(y) und der Varianz e(y) in folgender Formel maximiert wird:

$$M(y-1,y) = \max_{b(y)} \left\{ \sum_{T=b(y-1)}^{b(y)} L(T)W(y-1)f(y-1) + \sum_{T=b(y)+1}^{b(y+1)} L(T)W(y)f(y) \right\}$$

mit

$$f(y) = \exp\left( -\left( \frac{b(y)-b(y-1)-D(y)}{e(y)} \right)^2 \right).$$

6. Verfahren nach einem der Ansprüche 1 bis 5, wobei die passenden Wahrscheinlichkeitsvektoren durch einen Vertrauensvektor bzw. Konfidenzvektor c(T) in der Verzerrungsoperation gewichtet werden und die maximierende Passwahrscheinlichkeit von Wortuntermodellen spezifiziert wird durch:

$$M(y-1,y) = \max_{b(y)} \frac{\left\{ \sum_{T=b(y-1)}^{b(y)} c(T)L(T)W(y-1) + \sum_{T=b(y)+1}^{b(y+1)} c(T)L(T)W(y) \right\}}{\sum_{T=b(y-1)}^{b(y+1)} c(T)}$$

7. Verfahren nach Anspruch 6, wobei der Vertrauensvektor durch die folgende Funktion unter Verwendung eines Abstands a(T) zwischen dem Merkmalsvektor und dem jeweiligen passenden Wahrscheinlichkeitsvektor bestimmt wird:

$$c(T) = \exp\left( -\left( \frac{a(T)}{\sigma} \right)^2 \right),$$

wobei σ eine Größe für die erwartete Varianz der a(T)-Verteilung ist.

8. Verfahren nach einem der vorangehenden Ansprüche, wobei das Verfahren weiterhin Folgendes aufweist:

   - Bestimmen maximierter Untermodell-Passwahrscheinlichkeiten n(y) aus maximierten Passwahrscheinlichkeiten M;
   - Verknüpfen der maximierten Untermodell-Passwahrscheinlichkeiten für alle Positionen y mit einer Wortmodell-Passwahrscheinlichkeit P;
   - Bestimmen des Erkennungsergebnisses durch Bestimmen eines Worts, das dem Wortmodell mit höchster P entspricht.

9. Verfahren nach Anspruch 8, wobei die Wortmodell-Passwahrscheinlichkeit P aus Untermodell-Passwahrscheinlichkeiten N(y) berechnet wird als:

- eine Produktwahrscheinlichkeit unter Verwendung der Gleichung: $P = \prod_{y=1}^{y_{ende}} N(y);$ oder

- Wahrscheinlichkeit eines arithmetischen Mittels unter Verwendung der Gleichung: $P = \dfrac{1}{y_{ende}} \prod_{y=1}^{y_{ende}} N(y);$ oder

- als geometrisches Mittel unter Verwendung der Gleichung:

$$P = y_{ende}\sqrt{\prod_{y=1}^{y_{ende}} N(y)}\,.$$

**10.** Verfahren nach einem der Ansprüche 1 bis 3, wobei für jedes Wortuntermodell ein Untermodell-Vektor W(y) zur Verfügung gestellt wird und das Verfahren weiterhin Folgendes aufweist:

a) Auswählen einer Sequenz der passenden Wahrscheinlichkeitsvektoren L(T);
b) Auswählen einer Sequenz der Untermodellvektoren W(y), die ein zu untersuchendes Wortmodell darstellen;
c) Berechnen einer Wahrscheinlichkeitsmatrix L(T,y) mit Untermodell-Passwahrscheinlichkeiten L(T,y)=L(T)W(y);
d) Bestimmen eines optimalen Pfads O(T,y) durch die Wahrscheinlichkeitsmatrix unter Verwendung einer dynamischen Programmierung;
e) Bestimmen des Erkennungsergebnisses basierend auf einer Wortmodell-Passwahrscheinlichkeit $O(T,y_{ende})$ des optimalen Pfads.

**11.** Verfahren nach Anspruch 10, wobei ein Bestimmen des optimalen Pfads durch Berechnen der optimalen Pfadwahrscheinlichkeiten O(T,y) weiterhin Folgendes aufweist:

- Berechnen einer Pfadwahrscheinlichkeit $O_1(T,y) = O(T-1,y-1)L(T,y);$
- Berechnen einer Pfadwahrscheinlichkeit

$$O_2(T,y) = O(Te-1,y-1) \sum_{Ti=Te}^{T} L(Ti)W(y);$$

- Einstellen einer optimalen Pfadwahrscheinlichkeit O(T,y) auf die höhere Pfadwahrscheinlichkeit $O_1((T,y)$ oder $O_2(T,y)$.

**12.** Verfahren nach Anspruch 11, wobei eine Verweilzeit Td = T-Te bei der Berechnungsoperation der Pfadwahrscheinlichkeit $O_2(T,y)$ verwendet wird und das Verfahren weiterhin Folgendes aufweist:

- Berechnen der Pfadwahrscheinlichkeit

$$O_2(T,y) = O(Te-1,y-1)f(T-Te) \sum_{Ti=Te}^{T} L(Ti)W(y),$$ wobei f(T-Te) eine Skalie-rungsfunktion f(T-Te) = 1/(T-Te) und/oder eine unmodale Verteilungsfunktion ist;

- Einstellen von Te gleich T, wenn $O_1(T,y)$ höher als $O_2(T,y)$ ist;
- Berechnen einer nächsten optimalen Pfadwahrscheinlichkeit O(T+1,y) oder, wenn T = Tende, dann O(1,y+1).

**13.** Verfahren nach einem der Ansprüche 10, bis 12, wobei das Verfahren mit einer neuen Sequenz der Untermodellvektoren W(y) und/oder einer neuen Sequenz der passenden Wahrscheinlichkeitsvektoren L(T), die ein zu untersuchendes Wortmodell darstellen, wiederholt wird und das Verfahren weiterhin Folgendes aufweist:

f) Auswählen einer neuen Sequenz der Untermodellvektoren W(y), die ein weiteres zu untersuchendes Wortmodell darstellen;

g) Wiederholen der Operationen c) bis e), wobei bei der Operation e) das Erkennungsergebnis basierend auf der Wortmodell-Passwahrscheinlichkeit $O(T,y_{ende})$ von zuvor bestimmten optimalen Pfaden bestimmt wird; und/oder

h) Auswählen einer neuen Sequenz von Wahrscheinlichkeitsvektoren L(T);

i) Wiederholen der Operationen b) bis e) oder b) bis g), wobei bei der Operation e) das Erkennungsergebnis basierend auf der Wortmodell-Passwahrscheinlichkeit $O(T,y_{ende})$ von wenigstens einigen der bestimmten optimalen Pfade bestimmt wird.

**14.** Verfahren für eine Spracherkennung nach einem der Ansprüche 1 bis 13 basierend auf Modellen phonetischer Worte mit Sequenzen von Wortuntermodellen, wobei ein Erzeugen eines passenden Wahrscheinlichkeitsvektors weiterhin Folgendes aufweist:

- Segmentieren einer Vielzahl von Worten in eine Sequenz von Wortuntermodellen;
- Erzeugen einer Sequenz von Merkmalsvektoren für jedes der Sequenz von Wortuntermodellen;
- Auswählen von wenigstens einem passenden Codebuchvektor für jeden Merkmalsvektor;
- Erzeugen einer Gruppe von Wahrscheinlichkeitsvektoren, wobei jeder Wahrscheinlichkeitsvektor mit einem Codebuchvektor verbunden ist,

wobei die Komponenten der Wahrscheinlichkeitsvektoren die Wahrscheinlichkeit für die Aussprache von einem der Wortuntermodelle sind, wenn der zugehörige Codebuchvektor der passende Codebuchvektor ist.

**15.** Verfahren nach Anspruch 14, wobei die Wortuntermodelle z.B. Phoneme, Diphone oder Silben sind und jedes Untermodell seine durchschnittliche zeitliche Dauer und seine Varianz anzeigt.

**16.** Verfahren nach Anspruch 15, wobei die Vielzahl von Worten zuerst in eine oder mehrere Silben aufgeteilt wird und für jede Silbe ein Silbenmodell erzeugt wird und für jedes der Silbenmodelle eine Sequenz von Wortuntermodellen bestimmt wird.

**17.** Verfahren nach Anspruch 16, wobei die Wortuntermodelle z.B. Phoneme oder Diphone sind und jedes Untermodell weiterhin seine durchschnittliche zeitliche Dauer und seine Varianz anzeigt.

**18.** Computerprogrammprodukt, das einen Computerprogrammcode aufweist, der dann, wenn er auf einem Computer ausgeführt wird, ermöglicht, dass der Computer ein Verfahren nach einem der Ansprüche 1 bis 17 ausführt.

**19.** Spracherkennungssystem (100), das phonetische Wortmodelle mit Untermodellen verwendet, wobei das System Folgendes aufweist:

- einen Merkmalsgenerator (110) zum Erzeugen von Merkmalsvektoren aus Frames von Eingangssignalen;
- einen Merkmalskomparator (120) zum Auswählen von wenigstens einem passenden Codebuchvektor aus einem Codebuch (130) für jeden Merkmalsvektor;
- eine Wahrscheinlichkeits-Zusammensetzungseinheit (140) zum Erzeugen eines passenden Wahrscheinlichkeitsvektors aus den Codebuchvektoren;
- einen Wahrscheinlichkeitskomparator (160) zum Bestimmen eines Erkennungsergebnisses durch Bestimmen eines am besten passenden Wortmodells durch Verzerren (Warping) einer Sequenz von passenden Wahrscheinlichkeitsvektoren mit Sequenzen von Untermodellen von zu erkennenden Wortmodellen; und

wobei der Wahrscheinlichkeitskomparator eine Verzerrereinheit (180, 880) zum Maximieren einer Passwahrscheinlichkeit von Wortuntermodellen an benachbarten Positionen durch Bestimmen von auf einem Frame basierenden Grenzen zwischen aufeinanderfolgenden Wortuntermodellen unter Verwendung einer Verzerrungsoperation basierend auf Sequenzen der passenden Wahrscheinlichkeitsvektoren der Frames und Erwartungen von Wortuntermodellen an jeweiligen Positionen aufweist, wobei jedes zu erkennende Untermodell durch seine Position y in einem Wortmodell eines zu erkennenden Worts identifiziert wird.

**20.** Spracherkennungssystem nach Anspruch 19, das in einem digitalen Signalverarbeitungssystem (200) implementiert ist, welches System Folgendes aufweist:

eine Verarbeitungseinheit und eine Speichereinheit;

- wobei die Verarbeitungseinheit dazu geeignet ist, in Reaktion auf Anweisungen, die in der Speichereinheit gespeichert sind, die Merkmalsvektoren aus Frames eines eingegebenen Sprachsignals zu erzeugen;
- wobei die Verarbeitungseinheit weiterhin dazu geeignet ist, in Reaktion auf in der Speichereinheit gespeicherten Anweisungen wenigstens einen passenden Wahrscheinlichkeitsvektor für jeden der Merkmalsvektoren zu erzeugen, wobei jede Komponente des Wahrscheinlichkeitsvektors die Wahrscheinlichkeit für eine Äußerung bzw. Aussprache eines jeweiligen Wortuntermodells ist;
- wobei die Verarbeitungseinheit weiterhin dazu geeignet ist, in Reaktion auf in der Speichereinheit gespeicherte Anweisungen das Erkennungsergebnis zu bestimmen; und
- wobei die Verarbeitungseinheit weiterhin dazu geeignet ist, die PassWahrscheinlichkeit zu maximieren.

21. Spracherkennungssystem nach Anspruch 20, wobei die Verarbeitungseinheit in Reaktion auf in der Speichereinheit gespeicherten Anweisungen den passenden Wahrscheinlichkeitsvektor aus Codebuchvektoren mit zugehörigen Wahrscheinlichkeitsvektoren erzeugt, und wobei die Speichereinheit weiterhin Folgendes aufweist:

- einen flüchtigen Speicher (270), der die Anweisungen, die passenden Wahrscheinlichkeitsvektoren (272, 274, 275) und die Wortuntermodelle (278, 279) eines zu erkennenden Worts speichert;
- einen ersten nichtflüchtigen Speicher (240), der ein Codebuch und eine zugehörige Wahrscheinlichkeitsvektorengruppe speichert; und
- einen zweiten nichtflüchtigen Speicher (280), der die Wortmodelle und die Untermodelle speichert.

## Revendications

1. Procédé de reconnaissance vocale utilisant des modèles de mots phonétiques comprenant des sous-modèles, dans lequel ledit procédé comprend les étapes consistant à :

- générer (310) des vecteurs de particularité à partir de trames d'un signal vocal d'entrée ;
- générer (320) un vecteur de probabilité correspondant pour chacun desdits vecteurs de particularité, où chaque composante dudit vecteur de probabilité est la probabilité d'un énoncé d'un sous-modèle de mot respectif ;
- déterminer un résultat de reconnaissance (340) en déterminant un modèle de mot présentant la meilleure correspondance en déformant (330) une séquence de vecteurs de probabilité correspondants en séquence de sous-modèles de modèles de mot à reconnaître ; et

dans lequel chaque sous-modèle à reconnaître est identifié par sa position y dans un modèle de mot d'un mot à reconnaître et le procédé comprend en outre l'étape consistant à :

maximiser la probabilité de correspondance de sous-modèles de mot à des positions adjacentes en déterminant des frontières à base de trame entre des sous-modèles de mot successifs en utilisant une opération de déformation basée sur des séquences desdits vecteurs de probabilité correspondants desdites trames et des attentes de sous-modèles de mot à des positions respectives.

2. Procédé selon la revendication 1, utilisant un livre de code comprenant des vecteurs de livre de code en tant que vecteurs représentatifs dans l'espace des particularités, dans lequel le procédé comprend en outre les étapes consistant à :

- comparer lesdits vecteurs de particularité auxdits vecteurs de livre de code ;
- sélectionner au moins un vecteur de livre de code correspondant pour chaque vecteur de particularité ;
- générer ledit vecteur de probabilité correspondant à partir de vecteurs de probabilité associés auxdits vecteurs de livre de code correspondants.

3. Procédé selon la revendication 2, dans lequel ledit vecteur de probabilité correspondant est généré en interpolant lesdits vecteurs de probabilité associés auxdits vecteurs de livre de code correspondants selon les distances entre le vecteur de particularité et lesdits vecteurs de livre de code correspondants.

4. Procédé selon l'une des revendications 1 à 3, dans lequel ladite probabilité de correspondance $M(y-1, y)$ est maximisée en utilisant la formule :

$$M(y-1,y) = \max_{b(y)}\left\{ \sum_{T=b(y-1)}^{b(y)} L(T)W(y-1) + \sum_{T=b(y)+1}^{b(y+1)} L(T)W(y)\right\}$$

dans laquelle L(T) est ledit vecteur de probabilité correspondant au temps T, W(y) est un vecteur de sous-modèle à la position y et b est ladite frontière à base de trame.

5. Procédé selon la revendication 4, dans lequel pour chaque sous-modèle de mot une durée attendue D(y) et sa variance attendue e(y) sont utilisées dans ladite maximisation de probabilité de correspondance pour améliorer ladite détermination de frontière, dans lequel ladite probabilité de correspondance M(y-1, y) est maximisée au moyen d'une fonction unimodale f(y) en utilisant ladite durée D(y) et ladite variance e(y) dans la formule :

$$M(y-1,y) = \max_{b(y)}\left\{ \sum_{T=b(y-1)}^{b(y)} L(T)W(y-1)f(y-1) + \sum_{T=b(y)+1}^{b(y+1)} L(T)W(y)f(y)\right\}$$

avec

$$f(y) = \exp\left(-\left(\frac{b(y)-b(y-1)-D(y)}{e(y)}\right)^2\right).$$

6. Procédé selon l'une des revendications 1 à 5, dans lequel lesdits vecteurs de probabilité correspondants sont pondérés par un vecteur de confiance c(T) dans ladite opération de déformation et ladite probabilité de correspondance maximisante de sous-modèles de mot est spécifiée par :

$$M(y-1,y) = \max_{b(y)} \frac{\left\{ \sum_{T=b(y-1)}^{b(y)} c(T)L(T)W(y-1) + \sum_{T=b(y)+1}^{b(y+1)} c(T)L(T)W(y)\right\}}{\sum_{T=b(y-1)}^{b(y+1)} c(T)}$$

7. Procédé selon la revendication 6, dans lequel ledit vecteur de confiance est déterminé par la fonction suivante en utilisant une distance a(T) entre ledit vecteur de particularité et ledit vecteur de probabilité correspondant respectif :

$$c(T) = \exp\left(-\left(\frac{a(T)}{\sigma}\right)^2\right),$$

où σ est une quantité pour la variance attendue de la distribution a(T).

8. Procédé selon l'une des revendications précédentes, dans lequel ledit procédé comprend en outre les étapes consistant à :

- déterminer des probabilités de correspondance de sous-modèles maximisées N(y) à partir de probabilités de correspondance maximisées M ;

- fusionner lesdites probabilités de correspondance de sous-modèles maximisées pour toutes les positions y avec une probabilité de correspondance de modèle de mot P ;
- déterminer ledit résultat de reconnaissance en déterminant un mot qui correspond au modèle de mot avec P la plus élevée.

**9.** Procédé selon la revendication 8, dans lequel ladite probabilité de correspondance de modèle de mot P est calculée à partir de probabilités de correspondance de sous-modèles N(y) comme

- une probabilité de produit en utilisant l'équation : $P = \prod\limits_{y=1}^{y_{end}} N(y)$ ; ou

- comme une probabilité de moyenne arithmétique en utilisant l'équation : $P = \dfrac{1}{y_{end}} \sum\limits_{y=1}^{y_{end}} N(y)$ ; ou

- comme une moyenne géométrique en utilisant l'équation : $P = \sqrt[y_{end}]{\prod\limits_{y=1}^{y_{end}} N(y)}$ .

**10.** Procédé selon l'une des revendications 1 à 3, dans lequel pour chaque sous-modèle de mot un vecteur de sous-modèle W(y) est fourni et le procédé comprend en outre les étapes consistant à :

a) sélectionner une séquence desdits vecteurs de probabilité correspondants L(T) ;
b) sélectionner une séquence desdits vecteurs de sous-modèle W(y) représentant un modèle de mot à examiner ;
c) calculer une matrice de probabilité L(T,y) avec les probabilités de correspondance de sous-modèle L (T, y) = L(T)W(y) ;
d) déterminer un chemin optimal O(T,y) à travers ladite matrice de probabilité en utilisant une programmation dynamique ;
e) déterminer ledit résultat de reconnaissance en se basant sur la probabilité de correspondance de modèle de mot O(T,$y_{end}$) dudit chemin optimal.

**11.** Procédé selon la revendication 10, dans lequel la détermination dudit chemin optimal en calculant lesdites probabilités de chemin optimal O(T,y) comprend en outre les étapes consistant à :

- calculer la probabilité de chemin $O_1$(T,y) - 0(T-1, y-1) L (T, y) ;
- calculer la probabilité de chemin

$$O_2(T, y) = O(Te - 1, y - 1) \sum\limits_{Ti=Te}^{T} L(Ti)W(y) ;$$

- définir la probabilité de chemin optimal O(T,y) à la probabilité de chemin plus élevée $O_1$(T,y) ou $O_2$(T,y).

**12.** Procédé selon la revendication 11, dans lequel un temps de passage Td = T - Te est utilisé dans ladite opération de calcul de la probabilité de chemin $O_2$(T,y), et ledit procédé comprend en outre les étapes consistant à :

- calculer la probabilité de chemin

$$O_2(T, y) = O(Te - 1, y - 1)f(T - Te) \sum_{Ti=Te}^{T} L(Ti)W(y),$$

avec f(T-Te) étant une fonction d'échelle f(T-Te) = 1/(T-Te) et/ou une fonction de distribution unimodale ;
- définir Te comme étant égal à T, si $O_1(T,y)$ est supérieure à $O_2(T,y)$;
- calculer la probabilité de chemin optimal suivante O(T+1,y) ou, si T = Tend, alors O(1,y+1).

13. Procédé selon l'une des revendications 10 à 12, dans lequel ledit procédé est répété avec une nouvelle séquence desdits vecteurs de sous-modèle W(y) et/ou une nouvelle séquence desdits vecteurs de probabilité correspondants L(T) représentant un modèle de mot à examiner et ledit procédé comprend en outre les étapes consistant à :

    f) sélectionner une nouvelle séquence desdits vecteurs de sous-modèle W(y) représentant un autre modèle de mot à examiner ;
    g) répéter les opérations c) à e), où à l'opération e) ledit résultat de reconnaissance est déterminé en se basant sur la probabilité de correspondance de modèle de mot O(T, $y_{end}$) des chemins optimaux précédemment déterminés ; et/ou
    h) sélectionner une nouvelle séquence de vecteurs de probabilité L(T) ;
    i) répéter les opérations b) à e) ou b) à g), où à l'opération e) ledit résultat de reconnaissance est déterminé en se basant sur la probabilité de correspondance de modèle de mot O(T,$y_{end}$) d'au moins certains desdits chemins optimaux déterminés.

14. Procédé de reconnaissance vocale selon l'une des revendications 1 à 13, basé sur des modèles de mots phonétiques comprenant des séquences de sous-modèles de mot, dans lequel la génération d'un vecteur de probabilité correspondant comprend en outre les étapes consistant à :

    - segmenter une pluralité de mots en une séquence de sous-modèles de mot ;
    - générer une séquence de vecteurs de particularité pour chacun de ladite séquence de sous-modèles de mot ;
    - sélectionner au moins un vecteur de livre de code correspondant pour chaque vecteur de particularité ;
    - générer un ensemble de vecteurs de probabilité, chaque vecteur de probabilité est associé à un vecteur de livre de code, où les composants desdits vecteurs de probabilité sont la probabilité de l'énoncé de l'un parmi lesdits sous-modèles de mot si ledit vecteur de livre de code associé est ledit vecteur de livre de code correspondant.

15. Procédé selon la revendication 14, dans lequel lesdits sous-modèles de mot sont, par exemple, des phonèmes, des diphonèmes ou des syllabes et chaque sous-modèle indique en outre sa durée moyenne et sa variance.

16. Procédé selon la revendication 15, dans lequel ladite pluralité de mots est d'abord divisée en une ou plusieurs syllabes et pour chaque syllabe un modèle de syllabe est créé et pour chacun desdits modèles de syllabe une séquence de sous-modèles de mot est déterminée.

17. Procédé selon la revendication 16, dans lequel lesdits sous-modèles de mot sont, par exemple, des phonèmes ou des diphonèmes et chaque sous-modèle indique en outre sa durée moyenne et sa variance.

18. Produit de programme informatique comprenant un code de programme informatique qui, lorsqu'il est exécuté sur un ordinateur, permet audit ordinateur de réaliser un procédé selon l'une des revendications 1 à 17.

19. Système de reconnaissance vocale (100) utilisant des modèles de mots phonétiques comprenant des sous-modèles, dans lequel ledit système comprend :

    - un générateur de particularité (110) pour générer des vecteurs de particularité à partir de trames de signaux d'entrée ;
    - un comparateur de particularité (120) pour sélectionner au moins un vecteur de livre de code correspondant à partir d'un livre de code (130) pour chaque vecteur de particularité ;
    - un générateur de probabilité (140) pour générer un vecteur de probabilité correspondant à partir desdits vecteurs de livre de code;

- un comparateur de probabilité (160) pour déterminer un résultat de reconnaissance en déterminant un modèle de mot présentant la meilleure correspondance en déformant une séquence de vecteurs de probabilité correspondants en séquences de sous-modèles de modèles de mot à reconnaître ; et

dans lequel ledit comparateur de probabilité comprend un déformateur (180, 880) pour maximiser la probabilité de correspondance de sous-modèles de mot à des positions adjacentes en déterminant des frontières à base de trame entre des sous-modèles de mot successifs en utilisant une opération de déformation basée sur des séquences desdits vecteurs de probabilité correspondants desdites trames et des attentes de sous-modèles de mot à des positions respectives, où chaque sous-modèle à reconnaître est identifié par sa position y dans un modèle de mot d'un mot à reconnaître.

20. Système de reconnaissance vocale selon la revendication 19, étant mis en oeuvre dans un système de traitement de signaux numériques (200) comprenant :

une unité de traitement et une unité de stockage ;

- ladite unité de traitement est adaptée pour générer, en réponse à des instructions stockées dans ladite unité de stockage, lesdits vecteurs de particularité à partir de trames d'un signal vocal d'entrée ;
- ladite unité de traitement est en outre adaptée pour générer, en réponse à des instructions stockées dans ladite unité de stockage, ledit au moins un vecteur de probabilité correspondant pour chacun desdits vecteurs de particularité, où chaque composant dudit vecteur de probabilité est la probabilité de l'énoncé d'un sous-modèle de mot respectif ;
- ladite unité de traitement est en outre adaptée pour déterminer, en réponse à des instructions stockées dans ladite unité de stockage, ledit résultat de reconnaissance ; et
- ladite unité de traitement est en outre adaptée pour maximiser ladite probabilité de correspondance.

21. Système de reconnaissance vocale selon la revendication 20, dans lequel ladite unité de traitement génère, en réponse à des instructions stockées dans ladite unité de stockage, ledit vecteur de probabilité correspondant à partir de vecteurs de livre de code ayant des vecteurs de probabilité associés, et dans lequel ladite unité de stockage comprend en outre :

- une mémoire volatile (270) stockant lesdites instructions, lesdits vecteurs de probabilité correspondants (272, 274, 275) et sous-modèles de mot (278, 279) d'un mot à reconnaître ;
- une première mémoire non volatile (240) stockant un livre de code et un ensemble de vecteurs de probabilité associés ; et
- une seconde mémoire non volatile (280) stockant lesdits modèles et sous-modèles de mot.

**Fig. 1**

**Fig. 2**

Speech recognition processor — 210

MIC — 220

Sampling unit — 230

Output device — 290

Memory — 270

277 — Sub-model (y-1) — 278 | Sub-model (y) — 279

272 — L(T-2) | L(T-1) | L(T)

273 | 274 | 275

Word models / word sub-models — 280

Codebook vector set | Likelihood vector set — 240

250 | 260

200

EP 1 369 847 B1

Input speech signal

Generate feature vectors ⟋⟍⌐310

Generate matching
likelihood vectors ⟋⟍⌐320

Warp sequence of matching
likelihood vectors to
sequence of sub-models ⟋⟍⌐330

Determine recognition result ⟋⟍⌐340

**Fig. 3**

Compare feature vector with codebook vectors — 410

Select matching codebook vector(s) — 420

Generate matching likelihood vector associated to feature vector — 430

**Fig. 4**

| Label | Table of codebook vectors | Table of likelihood vectors |
|-------|---------------------------|-----------------------------|
| 1 | V1 | L1 |
| 2 | V2 | L2 |
| . | . | . |
| . | . | . |
| . | . | . |
| . | . | . |
| . | . | . |
| . | . | . |
| n | Vn | Ln |

Table 1

| Word Sub-model | Expected duration D | Expected variance of duration D |
|----------------|---------------------|----------------------------------|
| 1 | D1 | e1 |
| 2 | D2 | e2 |
| . | . | . |
| . | . | . |
| . | . | . |
| . | . | . |
| m | Dm | em |

Table 2

**Fig. 5**

Speech input signal x(t)

$U_k(T) = g_k(x(t))$ | Components of feature vector U(T), generated from x(t) by means of static transformation $g_k$ —12

k

U(T)

● codebook vectors V
■—■—■ feature vectors U
□ U(T), i.e. U at time T

V2(T)
a2
a1
V1(T)

—13

V1(T), V2(T), ..., a1, a2,...

15

discriminator

—16
—14

recognition result

**Fig. 6: prior art**

Speech input signal x(t)

$U_k(T) = g_k(x(t))$

Components of feature vector U(T), generated from x(t) by means of static transformation $g_k$

k

710

U(T)

● codebook vectors V
■—■—■ feature vectors U
□ U(T), i.e. U at time T
○ nearest V for U(T)

V2(T)
a2(T)
a1(T)
V1(T)

Feature-space

720

U(T),V1(T),V2(T),...

◆ Likelihood vectors L
◇ L of nearest codebook vectors
□ L(T): mixture of the latter L set

L1(T)

L2(T)

L(T)

Likelihood-space

740

L(T), c(T)

Model 1
Model 2
⋮
Model n

770

Warper

Discriminator

760
780

790

Recognition result

**Fig. 7**

Warper

Sequence of likelihood vectors L(T)

T

T=b(y-1)     T=b(y)     T=b(y+1)

N(y)     N(y+1)

Position y-1     Position y

warping

880

**Fig. 8**

Sub-model match likelihoods

990

$$P = \prod_y N(y)$$

Recognized word

Word models

970

**Fig. 9**

Input speech signal

Feature extraction — 1010

Phonetic likelihood and codebook database — 1030

Codebook vector selection — 1020

Voice activity detector — 1025

Word models / word sub-models — 1070

Warper — 1080

User interface — 1100

Decision unit — 1060

Sound out — 1090

**Fig. 10**

```
┌─────────────────────────────┐
│     Select sequence of L(T) │ ⟋‾1410
└─────────────────────────────┘
               │
               ▼
┌─────────────────────────────┐
│     Select sequence of W(y) │ ⟋‾1420
└─────────────────────────────┘
               │
               ▼
┌─────────────────────────────┐
│  Calculate sub-model match  │ ⟋‾1430
│  likelihoods L(T) W(y)      │
└─────────────────────────────┘
               │
               ▼
┌─────────────────────────────┐
│  Determine optimal path     │ ⟋‾1440
│  likelihoods O(T,y)         │
└─────────────────────────────┘
               │
               ▼
┌─────────────────────────────┐
│  Determine recognition result│ ⟋‾1450
│  based on highest O(T,y_end)│
└─────────────────────────────┘
```

## Fig. 11

Select new sequence of W(y) ∿ 1510

Determine recognition result based on word model match likelihoods for all examined word models ∿ 1520

∿ 1530

Y ◄— Repeat recognition with new sequence of W(y)?

N

∿ 1535

Repeat recognition with new sequence of L(T)? —N→ ( END ) ∿ 1560

Y

Select new sequence of L(T) ∿ 1540

Determine recognition result based on word model match likelihoods for all examined sequences of L(T) ∿ 1550

**Fig. 12**

1110 ⌇ Initialization:
set O(T,0)=1 for all T
set O(0,y)=0 for all y>0
set y=1

1190 ⌇ increase y

1120 ⌇ Set T=1
Set entry point Te=1

Calculate $O_1(T,y)$ ⌇1130

Calculate $O_2(T,y)$ ⌇1140

1150 ⌇ Set O(T,y) = max{$O_1(T,y)$, $O_2(T,y)$}

1170 ⌇ increase T

1151 ⌇ $O_1(T,y) > O_2(T,y)$ ? — Y → Set O(T,y) = $O_1(T,y)$ ⌇1152

N

Set Te = T ⌇1153

1154 ⌇ Set O(T,y) = $O_2(T,y)$

N ← T=Tend ? ⌇1160

Y

N ← y=yend ⌇1180

Y

1200 ⌇ Determine word
model match
likelihood O(T, $y_{end}$)

**Fig. 13**

**Fig. 14**

| y \\ T | 0 | 1 | | 2 | | 3 |
|---|---|---|---|---|---|---|
| | | 1115 | 1125 | 1135 | 1145 | 1155 |
| 0 | 1 | | 0 | | 0 | 0 |
| 1 | 1 | 0.1 | 0.1 | 0.2 | 0 | |
| 2 | 1 | 0.4 | 0.4 | 0.4 | 0.04 | |
| 3 | 1 | 0.2 | 0.3 | 0.6 | 0.24 | |
| 4 | 1 | 0.7 | 0.7 | 0.1 | 0.14 | |
| 5 | 1 | 0.1 | 0.4 | 0.3 | 0.21 | |
| 6 | 1 | 0.5 | 0.5 | 0.1 | 0.14 | |
| | | $L_{y=1}(T)$ | $O(T,1)$ | $L_{y=2}(T)$ | $O(T,2)$ | |
| | Start | Phonem 1 | | Phonem 2 | | |

Table 3

Word input signal ∿1210

1260 ∿ Set of word sub-models

Generate feature vector ∿1220

Segmentation of words into sequences of word sub-models ∿1240

Select matching codebook vectors ∿1230

Generate set of likelihood vectors ∿1250

**Fig. 15**

Word input signal

| Code book vectors | $V_\alpha$ | $V_\beta$ | $V_\gamma$ | $V_\delta$ | |
|---|---|---|---|---|---|
| Likelihood vectors | $L(V_\alpha)$ | $L(V_\beta)$ | $L(V_\gamma)$ | $L(V_\delta)$ | $\curvearrowright$1340 |
| Likelihood for sub-models — A | 0.1 | 0.1 | 0.4 | 0.3 | |
| B | 0.2 | 0.1 | 0.3 | 0.1 | |
| ⋮ | | | | | |
| N | 0.8 | 0.4 | 0.2 | 0.2 | |
| O | 0.1 | 0.6 | 0.3 | 0.9 | |
| ⋮ | | | | | |

| y | 1 | 2 |
|---|---|---|
| Sub-model | N | O |

**Fig. 16**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4903305 A
- US 5943647 A
- US 6061652 A
- WO 8404620 A
- US 6021387 A

- EP 0564166 A
- EP 0562138 A
- DE 19751123
- EP 1207518 A2

**Non-patent literature cited in the description**

- **AFIFI M et al.** NONLINEAR TIME ALIGNMENT IN STOCHASTIC TRAJECTORY MODELS FOR SPEECH RECOGNITION. *ICSLP 94: 1994 INTERNATIONAL CONFERENCE ON SPOKEN LANGUAGE PROCESSING (ICSLP,* 18 September 1994, vol. 1, 291-293

- **KIMURA T et al.** COMPACT-SIZE SPEAKER INDEPENDENT SPEECH RECOGNIZER FOR LARGE VOCABULARY USING COMPACTS METHOD. *ICSLP 94: 1994 INTERNATIONAL CONFERENCE ON SPOKEN LANGUAGE PROCESSING (ICSLP,* 22 September 1994, vol. 3, 1379-1382